# EUROPEAN PATENT SPECIFICATION

(11) **EP 3 885 131 B1**
(45) Date of publication and mention of the grant of the patent: **01.05.2024**
(21) Application number: 19887872.0
(22) Date of filing: 19.11.2019
(51) Int. Cl.: B32B 9/04, B32B 27/08, B32B 27/28, G02B 1/04, G02B 5/30, G02B 1/10, G02B 1/14, C08J 7/04, C08J 7/046

(54) **OPTICAL LAMINATE**
OPTISCHES LAMINAT
STRATIFIÉ OPTIQUE

(30) Priority: 23.11.2018 KR 20180146244
(43) Date of publication of application: 29.09.2021
(73) Proprietor: LG CHEM, LTD., Yeongdeungpo-gu, Seoul 07336 (KR)
(72) Inventor: PARK, Kwang Seung, Daejeon 34122 (KR); SIN, Chang Hoon, Daejeon 34122 (KR); OH, Hyun Taek, Daejeon 34122 (KR); PARK, Moon Soo, Daejeon 34122 (KR)
(74) Representative: Goddar, Heinz J.
(86) International application number: PCT/KR2019/015844
(87) International publication number: WO 2020/106016

(56) References cited:
- EP-A1- 2 987 809
- CN-A- 108 473 703
- JP-A- 2001 055 554
- JP-B2- 6 256 858
- KR-A- 20070 095 894
- KR-A- 20160 045 695
- KR-A- 20170 073 948
- KR-B1- 100 768 577
- US-A1- 2004 131 867
- US-A1- 2015 353 760
- US-A1- 2016 160 081

## Description

### Technical Field

The present application relates to an optical laminate.

### Background Art

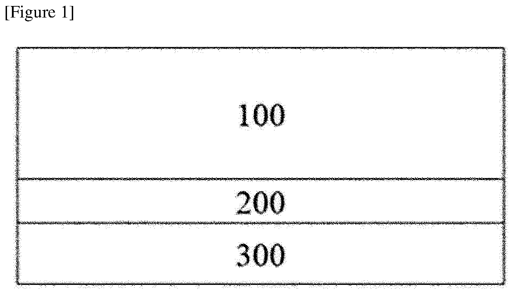

As shown in Figure 1, a display device having a touch function usually has a structure in which a so-called cover glass (100) is attached to the outer side of a polarizing plate (200) on a display panel (300).

The structure as in Figure 1 is mainly applied to correspond to the touch function of the touch display, but such a structure has an increased weight and thickness by including the cover glass, and it is also impossible to implement the curved structure due to the rigid nature of the glass.

US 2004/131867 A1 relates to a multilayered article (or layer system) comprising a substrate (S), a scratch-resistant layer (SR) and a top layer (T) and to a process for the preparation of this layer system.

JP 6 256 858 B2 provides a laminate having a silica film and a hard coat layer including a siloxane-based polymer component and an organic polymer component on a plastic substrate, the siloxane-based polymer component being present in a larger quantity in the hard coat layer on the side thereof that is adjacent to the silica film, and the organic polymer component being present in a larger quantity on the substrate side.

US 2016/160081 A1 relates to coating compositions comprising A) alkoxy-functional arylpolysiloxanes and/or alkoxy-functional aryl-alkylpolysiloxanes, B) at least one crosslinking catalyst and optionally C) at least one alkoxysilane and D) optionally further auxiliaries and additives, where the fraction of the alkoxy groups is at least 10 wt %, based on the sum of components A) and C).

CN 108 473 703 A provides a siloxane resin, a composition for a window film, the composition containing a cross-linking agent and an initiator, a flexible window film formed therefrom, and a flexible display device comprising the same

US 2015/353760 A1 relates to a transparent flexible hard coated film and a method of producing the same, and more particularly, to a transparent flexible hard coated film including a scratch-resistant surface and a method of producing the same. The transparent flexible hard coated film is formed by using an ionic polymerizable siloxane hard coating composition including: oligosiloxane having on average at least one alicyclic epoxy group per molecule; and an ionic polymerization initiator.

EP 2 987 809 A1 discloses a material having a low refractive index that exhibits a sufficiently low refractive index without deteriorating the strength of the cured film produced therefrom, and that can be cured by an active energy ray that is applicable for a resin base material that is not desired to be exposed to heat. A curable composition comprising: a siloxane oligomer (a) containing a radically polymerizable double bond obtained through hydrolysis and condensation of alkoxysilanes containing at least an alkoxysilane A and an alkoxysilane B in an amount of 100 parts by mass; inorganic fine particles in an amount of 10 parts by mass to 1,000 parts by mass; and a polymerization initiator generating a radical upon active energy ray irradiation in an amount of 0.1 parts by mass to 25 parts by mass; a cured film produced from the composition, and a laminate comprising a low refractive index layer produced from the composition.

### Disclosure

### Technical Problem

The present application provides an optical laminate.

### Technical Solution

Among physical properties referred to in this specification, the physical properties that the measurement temperature and/or the measurement pressure affect the results are the results measured at room temperature and/or normal pressure, unless otherwise specified.

The term room temperature is a natural temperature without warming or cooling, which means, for example, any one temperature in a range of 10°C to 30°C, or a temperature of 23°C or about 25°C or so. Also, in this specification, the unit of temperature is °C, unless otherwise specified.

The term normal pressure is a natural pressure without pressurizing or depressurizing, which means, usually, about 1 atm or so of atmospheric pressure.

Also, in this specification, in the case of physical properties in which the measurement humidity affects the results, the relevant physical properties are the physical properties measured at natural humidity which is not particularly controlled at the room temperature and/or normal pressure state.

In the present application, the term alkyl group, alkylene group or alkoxy group may mean a linear or branched alkyl group, alkylene group or alkoxy group, having 1 to 20 carbon atoms, 1 to 16 carbon atoms, 1 to 12 carbon atoms, 1 to 8 carbon atoms or 1 to 4 carbon atoms, or may mean a cyclic alkyl group, alkylene group or alkoxy group, having 3 to 20 carbon atoms, 3 to 16 carbon atoms, 3 to 12 carbon atoms, 3 to 8 carbon atoms or 3 to 6 carbon atoms, unless otherwise specified.

In the present application, the term alkenyl group may mean a linear or branched alkenyl group having 2 to 20 carbon atoms, 2 to 16 carbon atoms, 2 to 12 carbon atoms, 2 to 8 carbon atoms or 2 to 4 carbon atoms, or may mean a cyclic alkenyl group having 3 to 20 carbon atoms, 3 to 16 carbon atoms, 3 to 12 carbon atoms, 3 to 8 carbon atoms or 1 to 6 carbon atoms, unless otherwise specified.

In the present application, the term aryl group or arylene group may mean an aryl group or arylene group, having 6 to 24 carbon atoms, 6 to 18 carbon atoms or 6 to 12 carbon atoms, or may mean a phenyl group or a phenylene group, unless otherwise specified.

The alkyl group, alkylene group, alkoxy group, alkenyl group, aryl group or arylene group may also be optionally substituted with one or more substituents.

The optical laminate of this application comprises an optical functional layer, a cover layer on the top of the optical functional layer, and a pressure-sensitive adhesive layer on the bottom of the optical functional layer.

In this specification, the term top means a direction parallel to the direction from the optical functional layer toward the cover layer in the structure of the optical laminate, and the bottom means a direction opposite to the top. In one example, the bottom direction may be the same direction as the direction where an observer observes a display device when the optical laminate of the present application has been applied to the display device. Therefore, in this case, the surface on the upper side of the optical laminate may be the surface on the viewing side. In addition, the pressure-sensitive adhesive layer formed on the bottom of the optical functional layer may be a pressure-sensitive adhesive layer for attaching the optical laminate to a display panel.

The optical laminate comprises an optical functional layer. The term optical functional layer is a layer having at least one optically intended function. An example of such optically intended functions includes polarization such as linear polarization or circular polarization, reflection, refraction, absorption, scattering and/or phase retardation, and the like. In the optical field, various layers having such functions are known, and as the optical functional layer applied in the present application, an appropriate kind may be selected from the foregoing according to the purpose.

The optical functional layer is a polarizing layer or a retardation layer. Hereinafter, the case where the optical functional layer is a polarizing layer is described in this specification, but the kind of the optical functional layer is not limited to the polarizing layer. In addition, when the optical functional layer is a polarizing layer, the optical laminate may be a polarizing plate.

In this specification, the terms polarizing layer and polarizing plate refer to different obj ects. The term polarizing layer may refer to, for example, a layer, which exhibits a polarizing function, alone, and the polarizing plate may refer to a laminate comprising other elements together with the polarizing layer. Here, other elements included with the polarizing layer may be exemplified by a protective film or a protective layer of the polarizing layer, a retardation layer, an adhesive layer, a pressure-sensitive adhesive layer or a low reflection layer, and the like, but is not limited thereto.

Basically, the type of the polarizing layer applied in the present application is not limited. A known general polarizing layer is a linear absorbing polarizing layer, which is a so-called PVA (poly(vinyl alcohol)) polarizing layer. In this specification, the term PVA means polyvinyl alcohol or a derivative thereof, unless otherwise specified. As the PVA polarizing layer, for example, a stretched PVA film in which an anisotropic absorbent material such as iodine or a dichroic dye is adsorbed and oriented, or a so-called coating PVA polarizing layer, which is formed thinly by applying PVA to a coating method, and the like are known, but in the present application, all of the above-described polarizing layers may be applied. Furthermore, in addition to the PVA polarizing layer, a polarizing layer formed of a liquid crystal compound such as LLC (lyotropic liquid crystal), or a polarizing layer formed by aligning a polymerizable liquid crystal compound (so-called RM (reactive mesogen)) and a dichroic dye in a GH (guest-host) method, and the like may also be applied in the present application.

The thickness of such a polarizing layer which may be applied in the present application is not limited. That is, in the present application, a known general polarizing layer may be applied as the polarizing layer, so that the applied thickness is also a general thickness. Usually, the thickness of the polarizing layer may be in a range of 5 µm to 80 µm, but is not limited thereto.

In the present application, a cover layer is formed on the top of the optical functional layer. Such a cover layer may be present in direct contact with the upper surface of the optical functional layer, or another layer such as an adhesive layer may also be present between the cover layer and the optical functional layer.

The cover layer may have a multi-layer structure at least comprising at least two or more hard coat layers, or a multi-layer structure at least comprising at least one or more hard coat layers and a glass layer to be described below. When the cover layer comprises a glass layer, the glass layer may form the outermost surface of the cover layer.

The cover layer may exhibit scratch resistance and/or surface hardness to be described below. By showing the physical properties, the cover layer may exhibit resistance to vertical and tangential loads similar to that of the glass layer. Accordingly, the optical laminate comprising the cover layer is directly applied to the structure of the display device requiring the cover glass, whereby the application of the cover glass may be omitted. That is, for example, when the optical laminate of the present application is applied to the polarizing plate (200) in the structure shown in Figure 1, the cover layer may replace the role of the cover glass (100), as it is positioned at the outer side. That is, in this case, the use of the cover glass (100) is unnecessary.

The cover layer may exhibit excellent scratch resistance. For example, the cover layer may exhibit 500 g steel wool resistance of 5,000 times or more. Here, the 500 g steel wool resistance is a surface characteristic identified in a steel wool test, where the test may be evaluated in the manner described in the following examples. The steel wool test may be performed at a temperature of about 25°C and 50% relative humidity.

In another example, the 500 g steel wool resistance of the cover layer in the present application may be approximately 5,500 times or more, 6,000 times or more, 6,500 times or more, 7,000 times or more, 7,500 times or more, 8,000 times or more, 8,500 times or more, 9,000 times or more, or 9,500 times or more. Since it means that the higher the numerical value of the steel wool resistance, the cover layer exhibits more excellent scratch resistance, the upper limit thereof is not particularly limited. In one example, the 500 g steel wool resistance may be 20,000 times or less, or 15,000 times or less or so.

The cover layer may exhibit high surface hardness. For example, the cover layer may have pencil hardness of 5H or more. The pencil hardness can be measured by a method of drawing a pencil lead on a surface of a cover layer with a load of 500 g and an angle of 45 degrees at a temperature of about 25°C and 50% relative humidity using a general pencil hardness measuring instrument. The pencil hardness can be measured by increasing the hardness of the pencil lead stepwise until the occurrence of defects such as indentations, scratches or ruptures on the cover layer surface is confirmed. In another example, the pencil hardness of the cover layer may be approximately 6H or more, 7H or more, 8H or more, or 9H or more.

The cover layer may also have excellent flexibility. The cover layer of the present application can exhibit excellent flexibility while exhibiting, for example, the scratch resistance and/or surface hardness as mentioned above. For example, the cover layer may exhibit a maximum holding curvature radius of 1 to 40 pi or so. Here, when the cover layer has been bent according to the Mandrel test in accordance with ASTM D522 standard, the maximum holding curvature radius means a curvature radius at the time of being bent to the maximum without any defects observed on the surface of the cover layer.

In another example, the curvature radius may be 1.5 pi or more, or may also be 38 pi or less or so, 36 pi or less or so, 34 pi or less or so, 32 pi or less or so, 30 pi or less or so, 28 pi or less or so, 26 pi or less or so, 24 pi or less or so, 22 pi or less or so, 20 pi or less or so, 18 pi or less or so, 16 pi or less or so, 14 pi or less or so, 12 pi or less or so, 10 pi or less or so, 8 pi or less or so, 6 pi or less or so, 4 pi or less or so, or 3 pi or less or so.

The cover layer or the glass layer included in the cover layer may exhibit a water vapor transmission rate (WVTR) in a predetermined range. The water vapor transmission rate may indirectly reflect the density of the silica network in the glass layer included in the cover layer and/or the degree of crystallization or whether or not it is crystallized. For example, the cover layer or the glass layer may have a water vapor transmission rate of 1 g/m²/day or more. This water vapor transmission rate is a numerical value measured in accordance with ASTM F1249 standard. In another example, the water vapor transmission rate may be 1.5 g/m²/day or more or so, 2 g/m²/day or more or so, 2.5 g/m²/day or more or so, 3 g/m²/day or more or so, or 3.5 g/m²/day or more or so. The upper limit of the water vapor transmission rate of the silica glass layer is not particularly limited, but it may also be 20 g/m²/day or less or so, 19.5 g/m²/day or less or so, 19 g/m²/day or less or so, 18.5 g/m²/day or less or so, 18 g/m²/day or less or so, 17.5 g/m²/day or less or so, 17 g/m²/day or less or so, 16.5 g/m²/day or less or so, 16 g/m²/day or less or so, 15.5 g/m²/day or less or so, 15 g/m²/day or less or so, 14.5 g/m²/day or less or so, 14 g/m²/day or less or so, 13.5 g/m²/day or less or so, 13 g/m²/day or less or so, 12.5 g/m²/day or less or so, 12 g/m²/day or less or so, 11.5 g/m²/day or less or so, 11 g/m²/day or less or so, 10.5 g/m²/day or less or so, 10 g/m²/day or less or so, 9.5 g/m²/day or less or so, 9 g/m²/day or less or so, 8.5 g/m²/day or less or so, 8 g/m²/day or less or so, 7.5 g/m²/day or less or so, 7 g/m²/day or less or so, 6.5 g/m²/day or less or so, 6 g/m²/day or less or so, 5.5 g/m²/day or less or so, 5 g/m²/day or less or so, or 4.5 g/m²/day or less or so. This water vapor transmission rate can be measured according to ASTM F1249 standard.

In another example, the glass layer may have, in a state where it is formed on a polymer film, which is generally known to be no water vapor barrier property, to a thickness of approximately 1 µm or so, water vapor barrier properties such that the water vapor transmission rate of the polymer film alone is not changed by 10% or more. For example, if the water vapor barrier properties of the polymer film alone are W1 and the water vapor barrier properties of a laminate, in which the silica glass layer is formed on the polymer film to a thickness of approximately 1 µm or so, are W2, the absolute value of the value calculated as 100 X (W₂-W₁)/W₁ may be about 10 (%) or less or so. At this time, the polymer film may be exemplified by a PET (poly(ethylene terephthalate)) film or a TAC (triacetyl cellulose) film, having its own water vapor transmission rate in a level of 3.9 to 4,000 g/m²/day.

The characteristics of such a cover layer can be achieved by combining at least two or more hard coat layers as described below, or by combining at least one or more hard coat layers and glass layers as described below.

Here, the hard coat layer is an organic layer, an inorganic layer or an organic and inorganic layer formed so as to exhibit surface hardness of a predetermined level or more, comprising a polyorganosiloxane compound having an average unit of the following Formula F.

For example, the hard coat layer may have pencil hardness of 6H or more. The pencil hardness can be measured in the same manner as measuring the pencil hardness for the cover layer. In another example, the pencil hardness of the hard coat layer may be approximately 7H or more, 8H or more, or 9H or more.

A representative material of the hard coat layer is a curable compound cured by light such as ultraviolet rays or heat. The curable compound may be radically curable or cationically curable. Therefore, the hard coat layer comprises a cured curable compound. For example, the hard coat layer may be formed using a composition for hard coat layers comprising the compound and a polymerization initiator. Usually, the curable compound cured by light is used.

The curable compound forming a hard coat layer is a silicon compound having an average unit of the following formula F. In this case, the hard coat layer comprises a cured product of a silicon compound (polyorganosiloxane compound) having an average unit of the following formula F. The cured product may be, for example, a cationically cured product.

[Formula F] (R¹₃SiO_{1/2})ₐ(R²₂SiO_{2/2})_{b}(R³SiO_{3/2})_{c}(SiO_{4/2})_{d}(RO_{1/2})ₑ

In Formula F, R¹ to R³ are each independently a hydrogen atom, an alkyl group, an alkenyl group, an aryl group or a cation curable functional group, at least one of R¹ to R³ is a cation curable functional group, R is a hydrogen atom or an alkyl group, and when the sum of a, b, c and d is converted into 1, c/(a + b + c + d) is a number of 0.7 or more, and e/(a + b + c + d) is a number in a range of 0 to 0.4.

In one example, Formula F may be a condensation reactant of a condensable silane compound.

In Formula F, R¹ to R³ are each a functional group directly bonded to a silicon atom, which may also be present in plural in the compound of Formula F, and in the case of a plurality of functional groups, they may be the same or different. R¹ to R³ may each independently be a hydrogen atom, an alkyl group, an alkenyl group, an aryl group or a cation curable functional group. On the other hand, at least one of R¹ to R³ is a cation curable functional group, and for example, at least R³ (at least one of R³ when there are a plurality of R³) may be a cation curable functional group.

The cation curable functional group may be exemplified by an epoxy group. In this specification, the term epoxy group may mean a monovalent residue derived from cyclic ether having three ring constituent atoms or a compound comprising the cyclic ether, unless otherwise specified. The epoxy group may be exemplified by a glycidyl group, an epoxyalkyl group, a glycidoxyalkyl group or an alicyclic epoxy group, and the like. Here, the alicyclic epoxy group may mean a monovalent residue derived from a compound containing an aliphatic hydrocarbon ring structure and including a structure in which two carbon atoms forming the aliphatic hydrocarbon ring also form an epoxy group. As the alicyclic epoxy group, an alicyclic epoxy group having 6 to 12 carbon atoms may be exemplified, and for example, a 3,4-epoxycyclohexylethyl group and the like may be exemplified.

Such cation curable functional groups may be present in a ratio of approximately 50 mol% or more, 55 mol% or more, 60 mol% or more, 65 mol% or more, 70 mol% or more, 75 mol% or more, 80 mol% or more, 85 mol% or more, 90 mol% or more, or 95 mol% or more among all R¹ to R³. There is no particular limitation on the upper limit of the ratio of the cation curable functional groups, which may be, for example, about 100 mol% or less or so.

In Formula F, RO_{1/2} may be a condensable functional group bonded to a silicon atom. That is, the condensable functional group, which does not react in the process of condensing the condensable silane compound to form the compound of Formula F above and remains, may be represented as RO_{1/2}.

When the sum of a, b, c, and d in Formula F is converted into 1, c/(a + b + c + d) may be a number of 0.7 or more, 0.75 or more, 0.8 or more, 0.85 or more, 0.9 or more, or 0.95 or more, and may also be a number of 1 or less.

In addition, when the sum of a, b, c, and d in Formula F is converted into 1, f/(a + b + c + d) may be a number in the range of 0 to 0.4. In another example, f/(a + b + c + d) may also be 0.35 or less or so, 0.3 or less or so, 0.25 or less or so, 0.2 or less or so, 0.15 or less or so, 0.1 or less or so, or 0.05 or less or so.

When the compound of Formula F is applied as a material of the hard coat layer, the hard coat layer may comprise a cationically cured product of the compound of Formula F, as described above. That is, in one example, the hard coat layer may be a layer in which the compound of Formula F above is cured by a cationic reaction. In this case, the hard coat layer may comprise a cationically cured product of the compound of Formula F in a weight ratio of, for example, 55 weight% or more, 60 weight% or more, 65 weight% or more, 70 weight% or more, 75 weight% or more, 80 weight% or more, 85 weight% or more, 90 weight% or more, or 95 weight% or more. Also, in this case, the content of the cationically cured product may be 100 weight% or less, less than 100 weight%, 95 weight% or less, 90 weight% or less, 85 weight% or less, 80 weight% or less, 75 weight% or less, or 70 weight% or less or so.

The method of forming the hard coat layer by applying the material is known, and in the present application, the hard coat layer may be formed by applying such a known method. For example, the curing may be performed by coating a mixture that the above-mentioned compound and an appropriate initiator (e.g., if the compound is radically curable, a radical polymerization initiator is used; if the compound is cationically curable, a cationic polymerization initiator is used; or if it is of a hybrid type, a mixture of two initiators is used) are mixed and initiating the polymerization through the initiator. At this time, if the initiator is a photoinitiator, it may be initiated through light irradiation; and if it is a thermal initiator, it may be initiated through heat application.

The hard coat layer may comprise any known additive according to the purpose, where such an additive may be exemplified by organic, inorganic or organic and inorganic particulates, a dispersant, a surfactant, an antistatic agent, a silane coupling agent, a thickener, an anti-colorant, a colorant (pigment, dye), an antifoaming agent, a leveling agent, a flame retardant, an ultraviolet absorber, a tackifier, a polymerization inhibitor, an antioxidant and/or a surface modifier, and the like, but is not limited thereto.

Such a hard coat layer may have a thickness, for example, in a range of approximately 10µm to 100µm. In another example, the thickness of the hard coat layer may be 15 µm or more or so, 20 µm or more or so, or 25 µm or more or so, or may be 95 µm or less or so, 90 µm or less or so, 85 µm or less or so, 80 µm or less or so, 75 µm or less or so, 70 µm or less or so, 65 µm or less or so, 60 µm or less or so, 55 µm or less or so, 50 µm or less or so, 45 µm or less or so, 40 µm or less or so, or 35 µm or less or so.

The cover layer may also comprise a glass layer. In the present application, the term glass layer means a film having a silica network as a main component, which can exhibit at least any one of the advantages of a glass material. However, the glass layer need not show the same physical properties as those of the glass material, or exhibit all the advantages of the glass material, and if it can exhibit at least one or more of the advantages unique to the glass material, it corresponds to the glass layer defined in the present application. In the present application, such a glass layer may also be referred to as a silica glass layer or a silica layer.

In the present application, the term silica network may mean a mesh or three-dimensional cage structure consisting of siloxane linkages (-Si-O-Si-) or comprising the same. In one example, the silica network may be a condensate of alkoxysilane to be described below. The silica network comprises units of the following formula A and/or B, or may consist of such units. Here, the fact that the silica network consists of units of the following formula A and/or B means that the silica network contains only units of the following formula A and/or units of the following formula B.

[Formula A] RₙSiO_{(4-n)/2}

[Formula B] SiO_{3/2}L_{1/2}

In Formulas A and B, R is hydrogen, an alkyl group, an alkenyl group, an aryl group, an arylalkyl group, an epoxy group or a (meth)acryloyloxyalkyl group, n is 0 or 1, and L is an alkylene group.

In Formula B, as the alkylenegroup, a linear or branched alkylene group having 1 to 20 carbon atoms, 1 to 16 carbon atoms, 1 to 12 carbon atoms, 1 to 8 carbon atoms or 1 to 4 carbon atoms may be exemplified.

In Formula B, the fact that L is an alkylene group means that L is the above-mentioned alkylene group, or forms a divalent linking group in combination of two or more.

In Formula A, the right subscript of the oxygen atom means the number of siloxane linkages formed by one silicon atom in the silica network. For example, when n is 0, Formula A is represented by SiO_{4/2}, which means that one silicon atom is connected to four oxygen atoms to form four siloxane linkages. Since the siloxane linkage is formed by sharing one oxygen atom by two silicon atoms, the right subscript 4/2 of the oxygen atom in Formula means that four oxygen atoms are bonded to one silicon atom and each oxygen atom is boned to another silicon atom. Such a network can be formed, for example, by using a tetrafunctional silane such as tetraalkoxysilane as a raw material in a preparation method to be described below.

Similarly, when n is 1, Formula A is represented by RSiO_{3/2}, which means a form that one silicon atom is connected to three oxygen atoms to form three siloxane linkages and R as a functional group is attached to the silicon atom. Such a network can be formed, for example, by using a trifunctional silane such as trialkoxysilane as a raw material in a preparation method to be described below.

Formula B means that one silicon atom is connected to three oxygen atoms, and the three oxygen atoms are each connected to another silicon atom to form three siloxane linkages and simultaneously the silicon atom is connected to another silicon atom via L to form a -Si - L-Si- linkage. Such a network can be formed, for example, by using a compound having a structure in which two trialkoxysilyl groups are connected by a divalent linking group, such as 1,2-bis(triethoxysilane) ethane, as a raw material in a preparation method to be described below.

The silica network of the glass layer of the present application may be composed of any one of the units of Formula A or B, or a combination of two or more of the above units. In this case, as the unit of Formula A, any one of the unit in which n is 0 and the unit in which n is 1 may be used, or both of the two units may be used.

The glass layer of the present application may comprise the silica network as a main component. The fact that the glass layer comprises the silica network as a main component means a case where the ratio of the silica network in the glass layer is85 weight% or more, preferably 90 weight% or more, or more preferably 95 weight% or more as a weight ratio. The ratio of the silica network in the glass layer may be 100 weight% or less, or less than 100 weight%.

In the present application, such a silica network may be formed at a high density so that the silica layer may show necessary advantages among advantages of the glass material.

For example, the glass layer may exhibit excellent scratch resistance alone or in combination with other functional films (for example, the hard coat layer). For example, the glass layer may have 500 g steel wool resistance of 5,000 times or more. Here, the 500 g steel wool resistance is a surface characteristic identified in a steel wool test, where the test is evaluated in the manner described in the following examples. The steel wool test may be performed at a temperature of about 25°C and 50% relative humidity. In another example, the 500 g steel wool resistance of the glass layer may be approximately 5,500 times or more, 6,000 times or more, 6,500 times or more, 7,000 times or more, 7,500 times or more, 8,000 times or more, 8,500 times or more, 9,000 times or more, or 9,500 times or more. Since it means that the higher the numerical value of the steel wool resistance, the glass layer exhibits more excellent scratch resistance, the upper limit thereof is not particularly limited. In one example, the 500 g steel wool resistance may be 20,000 times or less or 15,000 times or less or so, 10,000 times or less or so, 9,000 times or less or so, or 8,500 times or less or so.

The silica glass layer may comprise nitrogen atoms together with the silica network.

The inventors have confirmed that in forming a silica layer, a glass layer having the above-mentioned characteristics can be formed even in a low-temperature process by applying a method known as a so-called sol-gel process, but applying a specific catalyst and if necessary, controlling process conditions. This method is completely different from, for example, the method of applying silazane, which is usually known to form a high-density silica layer, or the method of performing gelation at a high temperature, resulting in a different membrane quality.

For example, the glass layer may comprise nitrogen atoms, which are components derived from the specific catalyst, together with the silica network.

However, usually, in the case of the silica layer formed by the method of applying the silazane among the methods of forming the silica layer, it comprises the nitrogen atoms derived from silazane, but the relevant nitrogen atoms exist in a form bonded to silicon atoms, and the ratio is also different from the case of the present application. That is, the silica layer formed by the method applying silazane comprises linkages (Si-N) of silicon atoms and nitrogen atoms. However, the nitrogen atoms in the glass layer of the present application do not exist in this state, and thus the glass layer of the present application does not contain the linkage (Si-N) of the silicon atom and the nitrogen atom. On the other hand, the silica layer obtained through the high-temperature gelation process does not contain nitrogen atoms as well.

In one example, the nitrogen atoms contained in the glass layer may be nitrogen atoms contained in a specific amine compound, which is a Lewis base, or derived therefrom. That is, the amine compound is used as a catalyst in a glass layer formation process to be described below, and thus nitrogen atoms may be contained in this amine compound or derived therefrom.

Here, the fact that the nitrogen atoms have been derived from an amine compound as a catalyst may mean that when the amine compound is modified into another kind of compound while performing a catalytic action, the relevant nitrogen atom is contained in the modified compound.

The amine compound may have a pKa of 8 or less. In another example, the pKa may be 7.5 or less, 7 or less, 6.5 or less, 6 or less, 5.5 or less, 5 or less, 4.5 or less or about 4 or less or so, or may be about 1 or more, 1.5 or more, 2 or more, 2.5 or more, 3 or more or so.

The amine compound may have a boiling point in a range of 80°C to 500°C. In another example, the boiling point may be 90°C or higher, 100°C or higher, 110°C or higher, 120°C or higher, 130°C or higher, 140°C or higher, 150°C or higher, 160°C or higher, 170°C or higher, 180°C or higher, 190°C or higher, 200°C or higher, 210°C or higher, 220°C or higher, 230°C or higher, 240°C or higher, 250°C or higher, 260°C or higher, 270°C or higher, 280°C or higher, 290°C or higher, 300°C or higher, 310°C or higher, 320°C or higher, 330°C or higher, 340°C or higher, or 350°C or higher, or may be 1,000°C or lower, 900°C or lower, 800°C or lower, 700°C or lower, 600°C or lower, 500°C or lower, 400°C or lower, or 300°C or lower or so.

The amine compound may have a flash point of 80°C or higher. In another examples, the flash point may be 90°C or higher, 100°C or higher, 110°C or higher, 120°C or higher, 130°C or higher, 140°C or higher, 150°C or higher, or 155°C or higher, or may be 600°C or lower, 500°C or lower, 300°C or lower, 200°C or lower, 190°C or lower, 180°C or lower, or 170°C or less or so.

The amine compound may have a normal temperature vapor pressure of 10,000 Pa or less. In another examples, the normal temperature vapor pressure may be 9,000Pa or less, 8,000Pa or less, 7,000Pa or less, 6,000Pa or less, 5,000Pa or less, 4,000Pa or less, 3,000Pa or less, 2,000Pa or less, 1,000Pa or less, 900Pa or less, 800Pa or less, 700Pa or less, 600Pa or less, 500Pa or less, 400Pa or less, 300Pa or less, 200Pa or less, 100Pa or less, 90Pa or less, 80Pa or less, 70Pa or less, 60Pa or less, 50Pa or less, 40Pa or less, 30Pa or less, 20Pa or less, 10Pa or less, 9, 8Pa or less, 7Pa or less, 6Pa or less, 5Pa or less, 4Pa or less, 3Pa or less, 2Pa or less, 1Pa or less, 0.9Pa or less, 0.8Pa or less, 0.7Pa or less, 0.6Pa or less, 0.5Pa or less, 0.4Pa or less, 0.3Pa or less, 0.2Pa or less, 0.1Pa or less, 0.09Pa or less, 0.08Pa or less, 0.07Pa or less, 0.06Pa or less, 0.05Pa or less, 0.04Pa or less, 0.03Pa or less, 0.02Pa or less, 0.01Pa or less, 0.009Pa or less, 0.008Pa or less, 0.007Pa or less, 0.006Pa or less, 0.005Pa or less, 0.004Pa or less, or 0.003Pa or less, or may be 0.0001Pa or more, 0.0002Pa or more, 0.0003Pa or more, 0.0004Pa or more, 0.0005Pa or more, 0.0006Pa or more, 0.0007Pa or more, 0.0008Pa or more, 0.0009Pa or more, 0.001Pa or more, 0.0015Pa or more, or 0.002Pa or more or so.

By applying an amine compound having the characteristics as described above, a glass layer having desired physical properties can be effectively obtained.

The amine compound having such physical properties has secondary advantages that it is thermally stable, has a low risk of fire, and has low odor and explosion risk due to low vapor pressure.

The amine compound can be used without particular limitation as long as it has the above-mentioned characteristics.

For example, as the amine compound, a compound represented by any one of the following formulas 1 to 4 can be used.

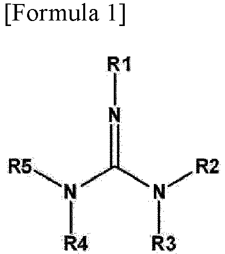

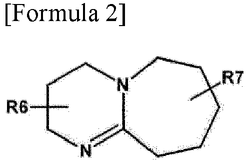

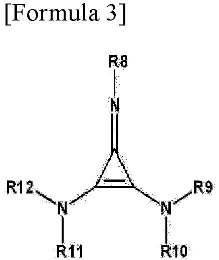

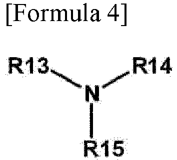

In Formulas 1 to 4, R₁ to R₁₅ may be each independently hydrogen or an alkyl group.

In Formulas 1 to 4, the alkyl group may be a linear, branched or cyclic alkyl group having 1 to 20 carbon atoms, 1 to 16 carbon atoms, 1 to 15 carbon atoms, 1 to 12 carbon atoms, 1 to 8 carbon atoms or 1 to 4 carbon atoms, or having 4 to 20 carbon atoms, 8 to 20 carbon atoms, 4 to 16 carbon atoms, 6 to 16 carbon atoms, 8 to 16 carbon atoms, 4 to 12 carbon atoms, 6 to 12 carbon atoms or 8 to 10 carbon atoms.

The amine compound may also be, for example, a compound of any one of the following formulas 1-1, 2-1, 3-1 and 4-1.

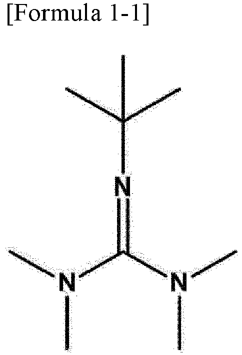

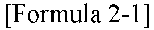

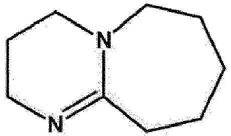

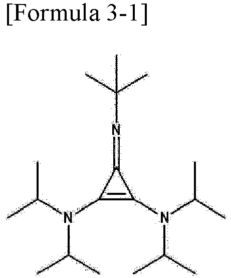

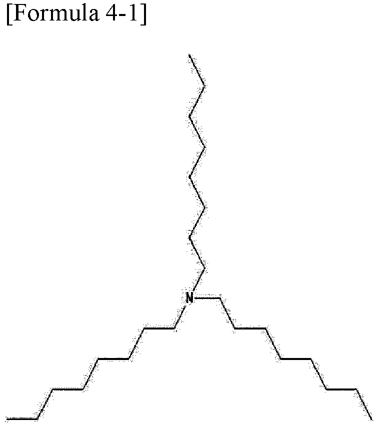

In a suitable example, the amine compound may be a compound wherein in Formula 4, R₁₃ to R₁₅ are alkyl groups. Here, the alkyl group may be a linear, branched or cyclic alkyl group having 1 to 20 carbon atoms, 1 to 16 carbon atoms, 1 to 15 carbon atoms, 1 to 12 carbon atoms, 1 to 8 carbon atoms or 1 to 4 carbon atoms, or having 4 to 20 carbon atoms, 6 to 20 carbon atoms, 8 to 20 carbon atoms, 4 to 16 carbon atoms, 6 to 16 carbon atoms, 8 to 16 carbon atoms, 4 to 12 carbon atoms, 6 to 12 carbon atoms or 8 to 10 carbon atoms.

In another example, the nitrogen atom may be contained in a compound known as a so-called latent base generator, or may be derived therefrom. At this time, the meaning of the derivation is as described above. The term latent base generator means a compound which does not show basicity under a normal environment such as room temperature and normal pressure but exhibits basicity by appropriate heat application or irradiation with light such as ultraviolet rays, or a compound having basicity or a compound which is converted into a catalyst. Such compounds are variously known, but may be, for example, compounds to be described below.

For example, the latent base generator may be a compound represented by the following formula 5. The compound represented by the following formula 5 can act as a thermal base generator.

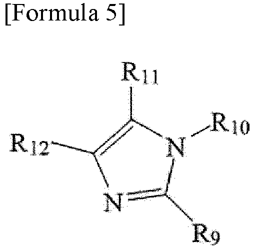

In Formula 5, R₉ may be hydrogen, an alkyl group having 1 to 20 carbon atoms or an aryl group having 6 to 12 carbon atoms, R₁₁ and R₁₂ may be each independently hydrogen or an alkyl group having 1 to 4 carbon atoms, and R₁₀ may be hydrogen, an alkyl group having 1 to 4 carbon atoms, an arylalkyl group having 7 to 16 carbon atoms or a substituent of the following formula 7.

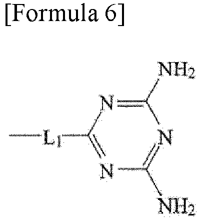

In Formula 6, L₁ may be an alkylene group having 1 to 4 carbon atoms, which may be, for example, a methylene group or an ethylene group, and the like.

In Formula 5, the alkyl group of R₉ may be, in one example, a linear or branched alkyl group having 1 to 20 carbon atoms, 1 to 16 carbon atoms, 1 to 12 carbon atoms, 1 to 8 carbon atoms or 1 to 4 carbon atoms, or may be a linear or branched alkyl group having 1 to 20 carbon atoms, 4 to 20 carbon atoms, 8 to 20 carbon atoms, 12 to 20 carbon atoms or 16 to 20 carbon atoms.

In Formula 5, the aryl group of R₉ may be an aryl group having 6 to 12 carbon atoms or a phenyl group.

In Formula 5, the arylalkyl group of R₁₀ may be an arylalkyl group which contains an alkyl group with 1 to 4 carbon atoms, while having 7 to 16 carbon atoms, which may be, for example, a phenylalkyl group having an alkyl group with 1 to 4 carbon atoms.

Here, the alkyl group, aryl group, arylalkyl group, and the like may be optionally substituted by one or more substituents, and in this case, the substituent may be exemplified by a hydroxyl group, a nitro group or a cyano group, and the like, but is not limited thereto.

In another example, the base generator may be an ionic compound having a cation represented by the following formula 7. The ionic compound having a cation represented by the following formula 7 can act as a photo-base generator.

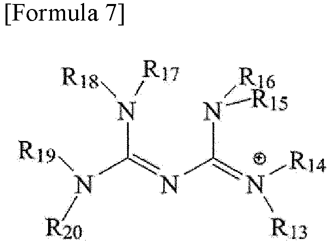

In Formula 7, R₁₃ to R₂₀ may be each independently hydrogen or an alkyl group having 1 to 20 carbon atoms.

The alkyl group may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In another example, the alkyl group may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

Here, the alkyl group of Formula 7 may be optionally substituted by one or more substituents, and in this case, the substituent may be exemplified by a hydroxyl group, a nitro group or a cyano group, and the like, but is not limited thereto.

In one example, the base generator may be an ionic compound having a cation represented by the following formula 8 or 9. The ionic compound having a cation represented by the following formula 8 or 9 can act as a photo-base generator.

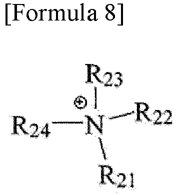

In Formula 8, R₂₁ to R₂₄ may be each independently hydrogen or an alkyl group having 1 to 20 carbon atoms.

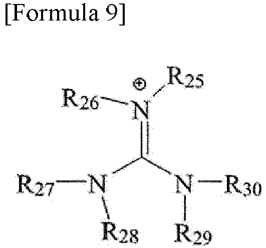

In Formula 9, R₂₅ to R₃₀ may be each independently hydrogen or an alkyl group having 1 to 20 carbon atoms.

In Formula 8 or 9, the alkyl group may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In Formula 8 or 9, the alkyl group may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

Here, in Formula 8 or 9, the alkyl group may be optionally substituted by one or more substituents, and in this case, the substituent may be exemplified by a hydroxyl group, a nitro group or a cyano group, and the like, but is not limited thereto.

The kind of an anion included in the ionic compound together with the cation such as Formulas 7 to 9 is not particularly limited, and an appropriate kind of anion may be used.

For example, the anion may be an anion represented by the following formula 10 or 11.

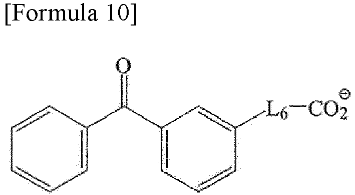

In Formula 10, L₆ may be an alkylene group having 1 to 20 carbon atoms, 1 to 16 carbon atoms, 1 to 12 carbon atoms, 1 to 8 carbon atoms or 1 to 4 carbon atoms, or may be an alkylidene group having the same number of carbon atoms.

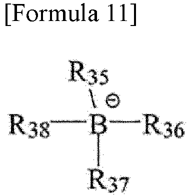

In Formula 11, R₃₅ to R₃₈ may be each independently hydrogen, an alkyl group or an aryl group.

In Formula 11, the alkyl group may be a linear, branched or cyclic alkyl group having 1 to 20 carbon atoms, 1 to 16 carbon atoms, 1 to 12 carbon atoms, 1 to 8 carbon atoms or 1 to 4 carbon atoms.

In Formula 11, the aryl group may be an aryl group having 6 to 30 carbon atoms, 6 to 24 carbon atoms, 6 to 18 carbon atoms or 6 to 12 carbon atoms, or may be a phenyl group.

In one example, the base generator may be a compound represented by the following formula 12. The compound represented by the following formula 12 can act as a photo-base generator.

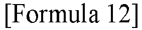

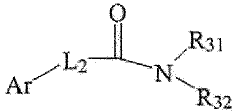

In Formula 12, R₃₁ and R₃₂ may be each independently hydrogen, a linear, branched or cyclic alkyl group. In another example, R₃₁ and R₃₂ may be linked to each other to form a nitrogen-containing heterocyclic structure together with the nitrogen atom to which R₃₁ and R₃₂ are linked. Also, in Formula 12, Ar may be an aryl group, and L₂ may be -L₃-O- or an alkenyl group having 2 to 4 carbon atoms, where L₃ may be an alkylene group having 1 to 4 carbon atoms or an alkylidene group having 1 to 4 carbon atoms.

In Formula 12, the alkyl group of R₃₁ and R₃₂ may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In another example, the alkyl group of R₃₁ and R₃₂ in Formula 12 may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

In another example, R₃₁ and R₃₂ may be linked to each other to form a nitrogen-containing heterocyclic structure together with the nitrogen atom to which R₃₁ and R₃₂ are linked. The ring structure may be a structure which includes one or more, for example, one or two, nitrogen atoms by including the nitrogen atom to which R₃₁ and R₃₂ are linked and also has 3 to 20, 3 to 16, 3 to 12 or 3 to 8 carbon atoms.

The nitrogen-containing heterocyclic structure can be exemplified by a piperidine structure or an imidazole structure, and the like, but is not limited thereto.

When the nitrogen-containing heterocyclic structure is a piperidine structure, the compound of Formula 12 may be represented by the following formula 12-1; and when it is an imidazole structure, it may be represented by the following formula 12-2.

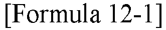

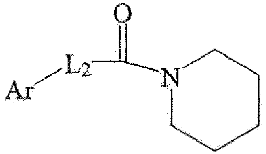

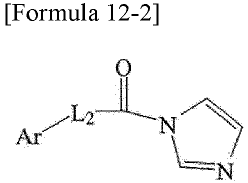

In Formulas 12-1 and 12-2, Ar may be an aryl group, which may be, for example, an aryl group having 6 to 30 carbon atoms, 6 to 30 carbon atoms or 6 to 18 carbon atoms.

An example of the aryl group may be exemplified by a phenyl group, a naphthyl group, an anthryl group or an anthraquinonyl group, and the like, and specifically, may be exemplified by a 9-anthryl group, or an anthroquinon-1-yl group or an anthroquinon-2-yl group, and the like, but is not limited thereto.

In Formulas 12-1 and 12-2, L₂ may be -L₃-O- or an alkenyl group having 2 to 4 carbon atoms. Here, in the case of -L₃-O-, a structure that L₃ is linked to Ar and O is linked to the carbon atom of the carbonyl group of Formulas 12-1 and 12-2, or a structure that O is linked to Ar and L₃ is linked to the carbon atom of the carbonyl group of Formula 8 can be derived.

Here, L₃ may be an alkylene group having 1 to 4 carbon atoms or an alkylidene group having 1 to 4 carbon atoms.

The alkyl group, the nitrogen-containing heterocyclic structure, the aryl group, the alkenyl group, the alkylene group and/or the alkylidene group of Formulas 12, 12-1 and/or 12-2 may be optionally substituted by one or more substituents, and the example thereof may be exemplified by a halogen atom, a hydroxyl group, a cyano group, a nitro group, an acryloyl group, a methacryloyl group, an acryloyloxy group and/or a methacryloyloxy group, and the like, but is not limited thereto.

As such a latent base generator, a compound having the above-described structure synthesized by a known substance synthesis method or a product known in the art can be obtained and used. Such a product includes WPBG series from WAKO or Curezol products from Shikoku Chemical, but is not limited thereto.

In the present application, the ratio of the nitrogen atoms contained in the silica layer is from 0.0001 to 6 weight% as measured by X-ray photoelectron spectroscopy (XPS). That is, as already described, the nitrogen atoms may be derived from the material used as the catalyst in the production process, and in this case, the ratio of nitrogen atoms may be determined according to the amount of the used catalyst.

The ratio of the nitrogen atoms contained in the silica layer is in a range of 0.0001 to 6 weight%. The ratio may be about 0.0005 weight% or more or so, 0.001 weight% or more or so, 0.005 weight% or more or so, 0.1 weight% or more or so, 0.15 weight% or more or so, 0. weight% or more or so, 0.25 weight% or more or so, 0.3 weight% or more or so, 0.35 weight% or more or so, 0.4 weight% or more or so, 0.45 weight% or more or so, 0.5 weight% or more or so, 0.55 weight% or more or so, or 0.6 weight% or more or so, or may also be 5.8 weight% or less or so, 5 weight% or less or so, 6 weight% or less or so, 5.4 weight% or less or so, 5.2 weight% or less or so, 5 weight% or less or so, 4.8 weight% or less or so, 4.6 weight% or less or so, 4.4 weight% or less or so, 4.2 weight% or less or so, 4 weight% or less or so, 3.8 weight% or less or so, 3.6 weight% or less or so, 3.4 weight% or less or so, 3.2 weight% or less or so, 3 weight% or less or so, 2.8 weight% or less or so, 2.6 weight% or less or so, 2.4 weight% or less or so, 2.2 weight% or less or so, 2.0 weight% or less or so, 1.8 weight% or less or so, 1.6 weight% or less or so, 1.4 weight% or less or so, 1.2 weight% or less or so, 1 weight% or less or so, 0.8 weight% or less or so, 0.6 weight% or less or so, 0.4% or less or so, 0.2 weight% or less or so, 0.1 weight% or less or so, 0.08 weight% or less or so, 0.06 weight% or less or so, 0.04 weight% or less or so, 0.02 weight% or less or so, 0.01 weight% or less or so, 0.008 weight% or less or so, or 0.006 weight% or less or so.

The glass layer may also comprise any other component in addition to the silica network and the nitrogen atoms. An example of such a component may be exemplified by nanoparticles such as silica, ceria or titania, fluorine-based or silicon-based slip agents and/or drying retarders, and the like, but is not limited thereto. These additives may be optionally added in consideration of the purpose, and the specific kinds and ratios thereof may be adjusted depending on the purpose.

Such a glass layer may have an appropriate thickness according to the desired physical properties. For example, the thickness of the glass layer may be in a range of approximately 0.4 to 5µm, and in another example, it may be 0.6µm or more, 0.8µm or more, 1µm or more, 1.2µm or more, 1.6µm or more, 1.8µm or more, or 2µm or more, or may also be 4.8µm or less, 4.6µm or less, 4.4µm or less, 4.2µm or less, 4µm or less, 3.8µm or less, 3.6µm or less, 3.4µm or less, 3.2µm or less, or 3µm or less or so.

Such a glass layer may be produced using a silica precursor layer formed of a silica precursor composition comprising a silica precursor and an acid catalyst.

The silica precursor layer may or may not comprise a latent base generator, i.e., a compound of the above-described chemical structure, as an additional component. When the latent base generator is included, the base may be generated by applying appropriate heat to the silica precursor, or irradiating it with light and gelation may proceed to form a glass layer, and when the latent base generator is not included, it may comprise a step of contacting the silica precursor layer with a Lewis base. The above-described amine compound may be used as the Lewis base.

In the present application, the term silica precursor composition is a raw material of a so-called sol-gel method or an intermediate product during processing the sol-gel method, which may mean a composition comprising a silica sol as a condensate of a silane compound. Thus, the silica precursor may be a composition comprising a silica precursor, and the silica precursor may mean a silane compound, which is the applied raw material, and/or a silica sol formed by condensation of the silane compound.

The silica precursor composition of the present application may be a composition obtained by treating a composition comprising a silane compound as a raw material with an acid catalyst. Thus, the silica precursor composition may have a pH of at least 5 or less. When the condensation reaction of the raw material is performed using a catalyst so as to have a pH in the above-mentioned range, it is advantageous to form a silica layer having desired physical properties in a subsequent process. In another example, the pH may be 4.5 or less, 4 or less, or 3.5 or less or so, or may be 0 or more, more than 0, 0.5 or more, or about 1 or more or so.

The silica precursor may comprise a silane compound as a raw material, a hydrolysate of the silane compound and/or a condensation reaction product of the silane compound.

At this time, as the silane compound which is a raw material, for example, a compound of the following formula D or E may be used.

[Formula D] SiR¹₍₄₋ₙ₎(OR²)ₙ

In Formula D, R¹ is the same as the definition for R in Formula A, R² may be an alkyl group having 1 to 4 carbon atoms, an aryl group having 6 to 12 carbon atoms or a hydrogen atom, and the like, and n is 3 or 4. Here, the alkyl group may be a linear or branched alkyl group having 1 to 4 carbon atoms, and may also be optionally substituted with one or more substituents. The alkyl group may be, for example, a methyl group or an ethyl group. The alkyl group, alkoxy group or aryl group may be optionally substituted, and in this case, the substituent includes a glycidyl group, a halogen atom, an alicyclic epoxy group, an acryloyl group, a methacryloyl group, an acryloyloxy group or methacryloyloxy grou, and the like, but is not limited thereto.

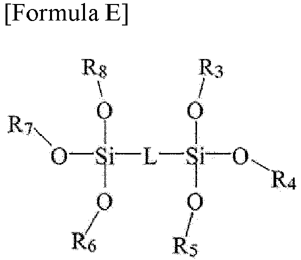

In Formula E, L is the same as L in Formula B as described above. In one example, L may be an alkylene group having 1 to 4 carbon atoms. In Formula E, R₃ to R₈ are each independently an alkyl group having 1 to 4 carbon atoms, an alkoxy group having 1 to 4 carbon atoms, an aryl group having 6 to 12 carbon atoms or a hydrogen atom. Here, the alkylene group may be a linear or branched alkylene group having 1 to 4 carbon atoms, and may also be optionally substituted with one or more substituents. The alkylene group may be, for example, a methylene group or an ethylene group. Also, in Formula 2, the alkyl group may be a linear or branched alkyl group having 1 to 4 carbon atoms, and may also be optionally substituted with one or more substituents. The alkyl group may be, for example, a methyl group or an ethyl group. Here, the alkoxy may be a linear or branched alkoxy group having 1 to 4 carbon atoms, and may also be optionally substituted with one or more substituents. The alkoxy may be, for example, a methoxy group or an ethoxy group. Here, the aryl group may be an aryl group having 6 to 12 carbon atoms or a phenyl group, and the like.

The silica precursor composition may comprise the aforementioned silica precursor (i.e., the silane compound as the raw material, its hydrolyzate and/or its condensate, and the like), for example, in a range of about 5 to 60 weight%. In another example, the ratio may be about 6 weight% or more, 7 weight% or more, 8 weight% or more, 9 weight% or more, 10 weight% or more, 11 weight% or more, 12 weight% or more, 13 weight% or more, 14 weight% or more, 15 weight% or more, 16 weight% or more, 17 weight% or more, 18 weight% or more, 19 weight% or more, 20 weight% or more, 21 weight% or more, 22 weight% or more, 23% or more, 24 weight% or more, 25 weight% or more, 26 weight% or more, 27 weight% or more, 28 weight% or more, 29 weight% or more, 30 weight% or more, 31 weight% or more, 32 weight% or more, 33 weight% or more, 34 weight% or more, 35 weight% or more, 36 weight% or more, 37 weight% or more, 38 weight% or more, or 39 weight% or more, or may also be about 59 weight% or less, 58 weight% or less, 57 weight% or less, 56 weight% or less, 55 weight% or less, 54 weight% or less, 53 weight% or less, 52 weight% or less, 51 weight% or less, 50 weight% or less, 49 weight% or less, 48 weight% or less, 47 weight% or less, 46 weight% or less, 45 weight% or less, 44 weight% or less, 43 weight% or less, 42 weight% or less, 41 weight% or less, 40 weight% or less, 39 weight% or less, 38 weight% or less, 37 weight% or less, 36 weight% or less, 35 weight% or less, 34 weight% or less, 33 weight% or less, 32 weight% or less, 31 weight% or less, 30 weight% or less, 29 weight% or less, 28 weight% or less, 27 weight% or less, 26 weight% or less, 25 weight% or less, 24 weight% or less, 23 weight% or less, 22 weight% or less, 21 weight% or less, 20 weight% or less, 19 weight% or less, 18 weight% or less, 17 weight% or less, 16 weight% or less, or 15 weight% or less or so.

In one example, the ratio of the silica precursor may be a percentage value obtained by calculating the amount of the solid content to be confirmed after drying and dewatering processes with respect to the silica precursor composition in relation to the amount of the composition before the drying and dewatering. In one example, the drying process may proceed at about 80°C for about 1 hour or so, and the dewatering process may proceed at about 200°C for about 24 hours. In another example, the ratio of the silica precursor may also be the amount of the silane compound applied to the preparation of the silica precursor composition.

Hereinafter, in defining the ratio between the components of the silica precursor composition herein, the ratio or weight of the used silica precursor may be based on the ratio or weight of the remaining components after the drying and dewatering processes, or may be the amount of the silane compound applied to the preparation of the silica precursor composition.

The silica precursor composition secured by performing solation to a level that such a content can be secured has advantageous processability and handling properties by exhibiting an appropriate viscosity, minimizes a drying time in the process of forming a glass layer, is free from stains and the like, and is advantageous to obtain a target product having excellent physical properties such as a uniform thickness.

The method of maintaining the content of the silica precursor within the above-mentioned range is not particularly limited, and the content can be achieved by controlling the kind of the applied catalyst or the process time in the solation process, and other process conditions.

The silica precursor composition may be a composition derived using an acid catalyst. For example, the silica precursor composition can be formed by bringing the silane compound into contact with an appropriate acid catalyst to perform the solation. The kind of the acid catalyst to be applied in the above process and the ratio thereof are not particularly limited and those which can induce a suitable condensation reaction and can secure the pH in the above-mentioned range can be used.

The acid catalyst may be exemplified by one or a mixture of two or more selected from hydrochloric acid, sulfuric acid, fluorosulfuric acid, nitric acid, phosphoric acid, acetic acid, hexafluorophosphoric acid, p-toluenesulfonic acid and trifluoromethanesulfonic acid, and the like, but is not limited thereto.

The amount of the acid catalyst used to form the silica precursor composition is not particularly limited, which may be controlled such that the pH in the above-described range is secured and, if necessary, a silica sol precursor content to be described below can be secured.

In one example, the acid catalyst may be used such that the silica precursor composition comprises 0.01 to 50 parts by weight of the acid catalyst relative to 100 parts by weight of the silica precursor. In another example, the ratio may be 0.03 parts by weight or more, 0.1 parts by weight or more, 0.5 parts by weight or more, 1 part by weight or more, 5 parts by weight or more, 10 parts by weight or more, 15 parts by weight or more, 20 parts by weight or more, or 25 parts by weight or more, or may also be 45 parts by weight or less, 40 parts by weight or less, 35 parts by weight or less, 30 parts by weight or less, 25 parts by weight or less, 20 parts by weight or less, 15 parts by weight or less, 10 parts by weight or less, 5 parts by weight or less, or 3 parts by weight or less or so.

The silica precursor composition may further comprise optional components in addition to the above components. For example, the silica precursor composition may further comprise a solvent.

As the solvent, for example, a solvent having a boiling point in a range of about 50°C to 150°C may be used. Such a solvent may be exemplified by an aqueous solvent such as water or an organic solvent, where the organic solvent may be exemplified by an alcohol, ketone or acetate solvent, and the like. An example of the applicable alcohol solvent may be exemplified by ethyl alcohol, n-propyl alcohol, i-propyl alcohol, i-butyl alcohol, n-butyl alcohol and/or t-butyl alcohol, and the like; the ketone solvent may be exemplified by acetone, methyl ethyl ketone, methyl isobutyl ketone, dimethyl ketone, methyl isopropyl ketone and/or acetyl acetone, and the like; and the acetate solvent may be exemplified by methyl acetate, ethyl acetate, propyl acetate and/or butyl acetate, without being limited thereto.

In one example, the composition may comprise a mixed solvent of the aqueous solvent and the organic solvent, where water is used as the aqueous solvent, and the alcohol, ketone and/or acetate solvent as described above may be used as the organic solvent, without being limited thereto.

The amount of the solvent in the silica precursor composition is not particularly limited, but for example, a solvent having the number of moles about 2 times to 8 times the number of moles of the silane compound used as the raw material may be used.

In one example, the silica precursor composition may comprise a solvent in an amount of 40 to 2,000 parts by weight relative to 100 parts by weight of the silica precursor.

In another example, the ratio may be 45 parts by weight or more, 50 parts by weight or more, 55 parts by weight or more, 60 parts by weight or more, 65 parts by weight or more, 70 parts by weight or more, 75 parts by weight or more, 80 parts by weight or more or 85 parts by weight or more, 90 parts by weight or more or so, 95 parts by weight or more or so, 100 parts by weight or more or so, 150 parts by weight or more or so, 200 parts by weight or more or so, 250 parts by weight or more or so, 300 parts by weight or more or so, 350 parts by weight or more or so, 400 parts by weight or more or so, 450 parts by weight or more or so, 500 parts by weight or more or so, 550 parts by weight or more or so, 600 parts by weight or more or so, 650 parts by weight or more or so, 700 parts by weight or more or so, or 750 parts by weight or more or so, or may also be 1,800 parts by weight or less, 1,600 parts by weight or less, 1,400 parts by weight or less, or 1,300 parts by weight or less or so.

When a mixture of an aqueous solvent and an organic solvent is applied as the solvent, the aqueous solvent may be used in an amount of about 5 to 200 parts by weight or so relative to 100 parts by weight of the organic solvent, but is not limited thereto. In another example, the ratio may be about 10 parts by weight or more, 15 parts by weight or more, 20 parts by weight or more, 25 parts by weight or more or 30 parts by weight or more, 35 parts by weight or more or so, 40 parts by weight or more or so, 45 parts by weight or more or so, 50 parts by weight or more or so, 55 parts by weight or more or so, 60 parts by weight or more or so, 65 parts by weight or more or so, 70 parts by weight or more or so, 75 parts by weight or more or so, 80 parts by weight or more or so, 85 parts by weight or more or so, 90 parts by weight or more or so, or 95 parts by weight or more or so, or may also be about 180 parts by weight or less or so, 160 parts by weight or less or so, 140 parts by weight or less or so, 120 parts by weight or less or so, or about 110 parts by weight or less or so.

In addition, as already described, the silica precursor composition may also comprise the above-described latent base generator. In this case, the specific type of the latent base generators that can be included is as described above.

When the latent base generator is included, the ratio may be included in a ratio of about 0.01 to 50 parts by weight or so relative to 100 parts by weight of the silica precursor. In another example, the ratio of the latent base generator may be approximately 0.05 parts by weight or more, 0.1 parts by weight or more, 0.5 parts by weight or more, 1 part by weight or more, 1.5 parts by weight or more, 2 parts by weight or more, 2.5 parts by weight or more, 3 parts by weight or more, or 3.5 parts by weight or more, or may also be 45 parts by weight or less, 40 parts by weight or less, 35 parts by weight or less, 30 parts by weight or less, 25 parts by weight or less, 20 parts by weight or less, 15 parts by weight or less, 10 parts by weight or less, or 5 parts by weight or less or so.

The silica precursor composition may comprise various additives, if necessary, in addition to the above-mentioned components, and examples thereof may include the same components as those exemplified as optional components of the glass layer.

However, in the case where the silica precursor composition does not contain the latent base generator and accordingly, a contact process with a Lewis base to be described below is performed, the silica precursor composition may comprise only the above-mentioned acid catalyst as the catalyst and may not comprise other base catalysts. That is, the precursor layer in contact with the Lewis base may comprise only the above-mentioned acid catalyst as the catalyst and may not comprise any base catalyst.

The silica precursor composition may be prepared, for example, by contacting the silane compound with an acid catalyst. In one example, the composition may be prepared by mixing the solvent and the silane compound to prepare a silica precursor dispersion liquid and then adding an acid catalyst to the dispersion liquid. In addition, if necessary, the above-mentioned latent base generator may be further compounded at an appropriate time.

Here, the types of the applied silane compound, solvent and acid catalyst, and the like are the same as described above, and their ratios can also be adjusted according to the above-mentioned ranges. Here, the addition of the acid catalyst and/or the latent base generator may also be performed by adding only the acid catalyst and/or the latent base generator itself to the dispersion liquid or by a method of mixing the acid catalyst and/or the latent base generator with a suitable solvent and then adding the mixture.

The step of forming the silica precursor composition may be performed so that the composition has a pH of 5 or less, as described above.

The step of forming the silica precursor composition through contact between the silane compound and the acid catalyst as described above may be performed at a temperature of 80°C or lower. For example, the contacting step with the acid catalyst may be performed at a temperature of approximately room temperature to 80°C or lower.

When the latent base generator is not included, the step of contacting the silica precursor layer formed from the silica precursor composition formed in the above manner with the amine compound, which is the above-mentioned Lewis base, is performed. Here, the silica precursor layer may be the above-described silica precursor composition itself or an object formed through a predetermined treatment therefrom. For example, the silica precursor layer may be one that the solvent is removed by drying the silica precursor composition to an appropriate level.

This silica precursor layer may be in a state molded in various forms, for example, may be molded in a film form. In one example, the silica precursor layer may be formed by applying the silica precursor composition on a suitable base material and drying it. By the drying, the solvent included in the composition may be removed to an appropriate level. The application may be performed by a suitable coating technique, and for example, bar coating, comma coating, lip coating, spin coating, dip coating and/or gravure coating methods and the like may be applied. The application thickness upon this application may be selected in consideration of the level of the desired silica layer. In the drying step, the conditions can be controlled so that the solvent can be removed to the desired level. According to one example, the drying step may be performed at a temperature of approximately 120°C or lower. In another example, the drying temperature may be performed at approximately 50°C or higher, 55°C or higher, 60°C or higher, 65°C or higher, 70°C or higher, or 75°C or higher, or may also be performed at about 110°C or lower, 100°C or lower, 90°C or lower, or 85°C or lower or so. In addition, the drying time can be adjusted in a range of approximately 30 seconds to 1 hour, and the time may also be 55 minutes or less, 50 minutes or less, 45 minutes or less, 40 minutes or less, 35 minutes or less, 30 minutes or less, 25 minutes or less, 20 minutes or less, 15 minutes or less, 10 minutes or less, 5 minutes or less, or 3 minutes or less or so.

After forming the silica precursor layer in such a manner, any treatment may be performed before contacting it with the Lewis base. An example of this treatment may be exemplified by a surface modification step or the like through plasma or corona treatment, and the like, but is not limited thereto. A specific manner of performing the plasma treatment and the corona treatment is not particularly limited, which may be performed, for example, by a known method such as a direct method or an indirect method using atmospheric pressure plasma. Such surface treatment can further improve the physical properties of the silica layer by increasing the contact efficiency in the contact step with the Lewis base and improving the base catalyst treatment effect.

Here, the type of base materials to which the silica precursor composition is applied is not particularly limited, and for example, the base material may also be a releasing process film in which a silica layer is removed therefrom after the formation of the silica layer, or a base material used together with the silica layer, for example, a functional organic film to be described below. For example, when the glass layer is applied to a component of an electronic element, the base material may be a component provided with the glass layer.

In the present application, since all the processes can be performed in a low temperature process, the base material has a high degree of application freedom, and for example, a polymer base material known to be unsuitable in a high temperature process may also be used. An example of such a base material can be exemplified by a film or the like in which a film of PET (polyethylene terephthalate), PEN (polyethylene naphthalate), PEEK (polyether ether ketone) and PI (polyimide), and the like is in the form of a single layer or a multilayer, but is not limited thereto.

In addition, as the polymer film, for example, a TAC (triacetyl cellulose) film; a COP (cycloolefin copolymer) film such as norbornene derivatives; an acrylic film such as PMMA (poly(methyl methacrylate); a PC (polycarbonate) film; a PE (polyethylene) film; a PP (polypropylene) film; a PVA (polyvinyl alcohol) film; a DAC (diacetyl cellulose) film; a Pac (polyacrylate) film; a PES (polyether sulfone) film; a PEEK (polyetheretherketone) film; a PPS (polyphenylsulfone) film; a PEI (polyetherimide) film; a PEN (polyethylenenaphthalate) film; a PET (polyethyleneterephtalate) film; a PI (polyimide) film; a PSF (polysulfone) film; a PAR (polyarylate) film or a fluororesin film can also be applied.

If necessary, the base material may also be subjected to suitable surface treatment.

The base material may also be an appropriate functional film, for example, an optical functional film such as a retardation film, a polarizing film, a luminance enhancement film, or a high refractive index or low refractive index film, if necessary.

When the latent base generator is not included, a silica precursor layer formed through the above steps may be contacted with an amine compound, which is a Lewis base, to form a silica layer. The term Lewis base means a material capable of imparting a non-covalent electron pair, as is known.

In the present application, a silica layer having desired physical properties even at a low temperature can be formed by contacting the above-mentioned specific silica precursor composition with a Lewis base to be subjected to gelation and forming a glass layer.

The method of contacting the silica precursor layer with the Lewis base is not particularly limited. For example, a method of immersing the silica precursor layer in the Lewis base, or coating, spraying and/or dropping the Lewis base on the silica precursor layer, and the like can be applied.

As the Lewis base, an amine compound having the pKa, boiling point, flash point and/or normal temperature vapor pressure as described above may be used.

Such an amine compound may be in a liquid phase at a temperature of 120°C or 120°C or lower. That is, the amine compound may also be applied as itself or may be mixed with an aqueous solvent, such as water, or an organic solvent, and the like and applied. For example, when the compound is in a solid phase at a temperature of 120°C or lower, it can be dissolved in an aqueous or organic solvent and used. Here, the usable organic solvent may be exemplified by one or more of N,N-dimethylacetamide (DMAc), N-methylpyrrolidone (NMP), N,N-dimethylformamide (DMF), 1,3-dimethyl-2-imidazolidinone, N,N-diethylacetamide (DEAc), N,N-dimethylmethoxyacetamide, dimethylsulfoxide, pyridine, dimethylsulfone, hexamethylphosphoramide, tetramethylurea, N-methylcaprolactam, tetrahydrofurane, m-dioxane, p-dioxane, 1,2-dimethoxyethane, bis(2-methoxyethyl)ether, 1,2-bis(2-(methoxyethoxy)ethane, bis[2-(2-methoxyethoxy)]ether, polyethylene glycol) methacrylate (PEGMA), gamma-butyrolactone (GBL), and equamide (Equamide M100, Idemitsu Kosan Co., Ltd), but is not limited thereto.

As described above, the Lewis base is brought into contact with the above-mentioned specific silica precursor composition to perform gelation, whereby the glass layer having desired physical properties can be effectively obtained.

That is, the gelation or curing reaction of the silica precursor layer can be induced by the contact with the Lewis base.

Such gelation or curing can proceed even at a low temperature condition and can proceed effectively without any special treatment to form a silica layer having desired physical properties. In one example, the gelation or curing reaction, that is, the contact with the Lewis base, can be performed at a low temperature, for example at about 120°C or less or so. In one example, the contact may also be performed at 110°C or lower, 100°C or lower, 90°C or lower, or 85°C or lower and may also be performed at 60°C or higher, 65°C or higher, 70°C or higher, or 75°C or higher or so.

When the latent base generator is included, the silica precursor may be applied by heat or irradiated with light, without the contact process, to generate a base, thereby performing the gelation or curing and forming a glass layer.

That is, when the latent base generator is included, the step of activating the base generator may be performed. The activation step is collectively referred to as a step of converting the relevant generator to a basic compound or a catalyst, or producing the compound or catalyst.

The specific conditions of the activation step of the base generator may be adjusted in consideration of the kind of the used base generator. For example, when the thermal base generator is applied, the activation step may be performed by applying heat so that the silica layer is maintained at a temperature within the range of about 50°C to 250°C, a temperature within the range of about 50°C to 200°C or a temperature within the range of about 50°C to 150°C, and when the photo-base generator is applied, it may be performed by irradiating the silica layer with light having a wavelength of approximately 300nm to 450nm. Here, the heat application can be performed, for example, for a time in a range of approximately 1 minute to 1 hour, and the light irradiation can be performed at an intensity of approximately 200mJ/cm² to 3J/cm².

In the present application, the glass layer, which is a silica layer, can be formed in the same manner as above. In the present application, after forming the glass layer in this manner, another additional process such as an optional cleaning process may also be performed.

In the method of forming a glass layer of the present application, all processes can proceed to low-temperature processes. That is, all processes of the present application can be performed under a temperature of the low-temperature process to be described below. In the present application, the term low-temperature process means a process having a process temperature of about 350°C or lower, about 300°C or lower, about 250°C or lower, about 200°C or lower, about 150°C or lower, or about 120°C or lower. In the production process of the glass layer of the present application, all the processes can be performed in the above temperature range.

In the present application, since a glass layer having desired physical properties, for example, a high-density and high-hardness silica layer can be effectively formed even by the low-temperature process as described above, for example, a large amount of silica layers having desired physical properties can be formed by a continuous and inexpensive process, and the silica layer can also be effectively formed directly even on a base material which is weak against heat, such as a polymer film. The lower limit of the process temperature in the low-temperature process is not particularly limited, and for example, the low-temperature process may be performed at about 10°C or higher, 15°C or higher, 20°C or higher, or 25°C or higher.

As described above, the cover layer comprising the hard coat layer and the glass layer may have various structures.

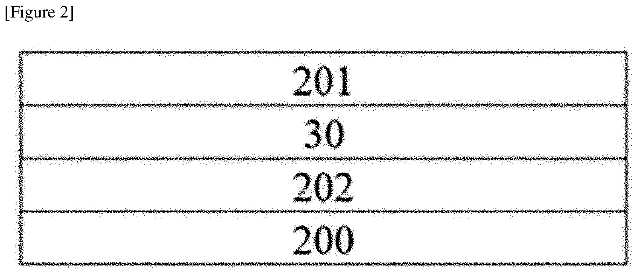

For example, the cover layer may comprise a base film, where the cover layer may comprise an upper hard coat layer (201) on the upper surface of the base film (30) and a lower hard coat layer (202) on the lower surface, as shown in Figure 2. At this time, the term upper surface is a surface in the above-described upper direction based on the base film, and the lower surface is a surface in the above-described lower direction based on the base film.

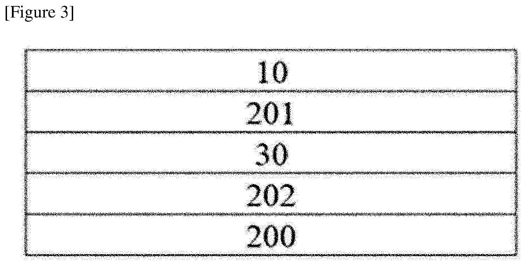

When the glass layer is included in the cover layer having the structure as shown in Figure 2, the glass layer may be formed on the top of the upper hard coat layer (201). Figure 3 is an example when the glass layer (10) is formed in this manner.

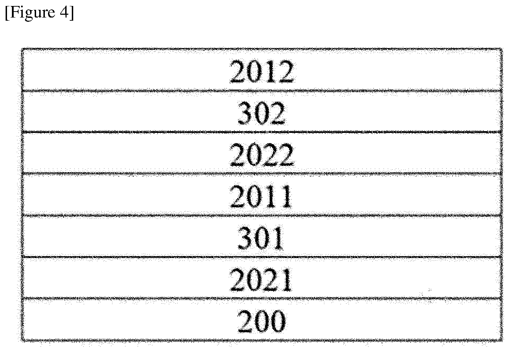

The cover layer may comprise at least two layers of a laminate of the form as shown in Figure 2. Figure 4 is an example of such a structure, which comprises a first base film (301); a first upper hard coat layer (2011) on the upper surface of the first base film (301); a first lower hard coat layer (2021) on the lower surface of the first base film (301), a second base film (302), a second upper hard coat layer (2012) on the upper surface of the second base film (302) and a second lower hard coat layer (2022) on the lower surface of the second base film (302).

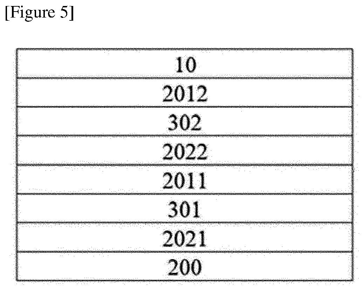

The glass layer may also be included in the cover layer having the structure as shown in Figure 4, where the glass layer may be formed on the top of the second upper hard coat layer (2012). Figure 5 is an example when the glass layer (10) is formed in this manner.

In Figures 2 to 5, the reference numeral 200 is the optical functional layer (200).

The type of the base film that can be applied in the above structure is not particularly limited, and for example, a known polymer film may be applied. An example of such a film includes a TAC (triacetyl cellulose) film; a COP (cycloolefin copolymer) films such as norbornene derivatives; an acrylic film such as PMMA (poly(methyl methacrylate); a PC (polycarbonate) film; a PE (polyethylene) film; a PP (polypropylene) film; a PVA (polyvinyl alcohol) film; a DAC (diacetyl cellulose) film; a Pac (polyacrylate) film,; a PES (polyether sulfone) film; a PEEK (polyetheretherketon) film; a PPS (polyphenylsulfone) film, a PEI (polyetherimide) film; a PEN (polyethylene naphthatate) film; a PET (polyethylene terephtalate) film; a PI (polyimide) film; a PEI (poly(etherimide)) film, a PSF (polysulfone) film; a PAR (polyarylate) film or a fluororesin film, and the like, but is not limited thereto.

Usually, such a base film has a thickness in a level of 20µm to 100µm or so.

In order for the cover layer to have the above-described physical properties, the characteristics of each layer may be adjusted in the cover layer having various structures.

For example, in the structures of Figures 2 to 5, the upper hard coat layers (201, 2012, 2011) of the hard coat layers formed on the top and the bottom based on the base film may have an elastic modulus of the same range as that of the lower hard coat layers (202, 2022, 2021), or may have a higher elastic modulus than that of the lower hard coat layers (202, 2022, 2021). The elastic modulus as mentioned herein may be measured by using a nanoindenter. When such an instrument is used, the elastic modulus can be identified by a method of pressing a specimen with the tip of the instrument and accordingly measuring the deformation of the specimen. A known instrument may be used as the nanoindenter (for example, Nano Indenter XP from MTS, etc.). For example, the ratio (M_{U}/M_{L}) of the elastic modulus (Mu) of the upper hard coat layer to the elastic modulus (M_{L}) of the lower hard coat layer may be in a range of about 0.8 to 10, where the elastic modulus (M_{L}) of the lower hard coat layer may be in a range of 0.1 to 20 GPa.

When a glass layer is formed in the structures as shown in Figure 3 or 5, the elastic modulus (M_{G}) of the glass layer may be approximately similar to the elastic modulus (Mu) of the upper hard coat layer, or may be larger than the elastic modulus (Mu) of the upper hard coat layer, and for example, the ratio (M_{G}/M_{U}) may be in the range of approximately 0.8 to 10.

For example, in the structures of Figures 2 to 5, the upper hard coat layers (201, 2012, 2011) of the hard coat layers formed on the top and the bottom based on the base film may have the same thickness as that of the lower hard coat layers (202, 2022, 2021), or may have a smaller thickness than the lower hard coat layers (202, 2022, 2021). For example, the ratio (T_{U}/T_{L}) of the thickness (Tu) of the upper hard coat layer to the thickness (T_{L}) of the lower hard coat layer may be in a range of about 0.1 to 1.5. In this case, the thickness of each hard coat layer is as described above.

For example, when the cover layer comprises the glass layer as in the structure of Figure 3 or 5, the thickness (T_{G}) of the glass layer included in the cover layer may be the same as the thickness (T_{H}) of the single hard coat layer (201, 202, 2011, 2012, 2021 or 2022), or may be smaller than that. For example, the ratio (T_{H}/T_{G}) of the thickness (T_{H}) of the single hard coat layer to the thickness (T_{G}) of the glass layer may be about 4 or more. In another example, the ratio (T_{H}/T_{G}) may be about 6 or more, 8 or more, 10 or more, 12 or more, or 14 or more. Furthermore, in another example, the ratio (T_{H}/T_{G}) may be about 40 or less, 35 or less, 30 or less, 25 or less, 20 or less, 18 or less, or 16 or less or so.

When the cover layer comprises a plurality of hard coat layers together with the glass layer, the ratio (T_{TH}/T_{G}) of the total thickness (T_{TH}) of the hard coat layers to the thickness (T_{G}) of the glass layer may be 8 or more. In another example, the ratio (T_{TH}/T_{G}) may be 10 or more, 15 or more, 20 or more, 25 or more, 30 or more, 35 or more, 40 or more, 45 or more, 50 or more, 55 or more, or 60 or more, or may be 200 or less, 180 or less, 160 or less, 140 or less, 120 or less, 100 or less, 90 or less, 80 or less, 70 or less, or 60 or less or so.

In the structure, the thickness ranges of the single glass layer and the hard coat layers are within the above-mentioned ranges.

The cover layer having such a structure may be laminated in contact with the upper surface of the above-described optical functional layer, or a layer for adhesion such as an adhesive layer may also exist between the cover layer and the optical functional layer.

The optical laminate may also comprise a variety of other layers as long as the cover layer and the optical functional layer are basically included.

Such a layer may be exemplified by, for example, a protective film for the optical functional film, a pressure-sensitive adhesive layer, an adhesive layer, a retardation film or a low reflection layer, and the like. The layers may be the above-described additional layers.

As the type of the additional layers, a general configuration known in the art may be applied. For example, as the protective film, a resin film having excellent transparency, mechanical strength, thermal stability, moisture barrier properties or isotropy, and the like may be used, and an example of such a film may be exemplified by a cellulose resin film such as a TAC (triacetyl cellulose) film, a polyester film, a polyether sulfone film, a polysulfone film, a polycarbonate film, a polyamide film, a polyimide film, a polyolefin film, an acryl film, a cyclic polyolefin film such as a norbornene resin film, a polyarylate film, a polystyrene film, a polyvinyl alcohol film and the like. Also, in addition to the protective layer in the form of a film, a cured resin layer obtained by curing a thermal or photocurable resin such as (meth)acryl series, urethane series, acrylurethane series, epoxy series or silicone series may also be used as the protective film. Such a protective film may be formed on one side or both sides of the optical functional layer. The protective film as above may be present on the bottom of the optical functional layer, for example, on the side opposite to the side facing the cover layer from the optical functional layer.

As the retardation film, a general material may be applied. For example, a monoaxially or biaxially stretched birefringent polymer film or an alignment film of a liquid crystal polymer, and the like may be applied. The thickness of the retardation film is also not particularly limited.

The protective film or the retardation film as described above may be attached to the optical functional layer or the like by an adhesive or the like, where such a protective film or the like may be subjected to easy adhesion treatment such as corona treatment, plasma treatment, primer treatment or saponification treatment.

In addition, if necessary, a hard coat layer, a low reflection layer, an antireflection layer, an anti-sticking layer, a diffusion layer or a haze layer, and the like may be present on the upper surface of the cover layer.

For the adhesion of each layer in the optical laminate, an adhesive may be used. The adhesive may be exemplified by an isocyanate-based adhesive, a polyvinyl alcohol-based adhesive, a gelatin-based adhesive, vinyl series latex series or water-based polyester, and the like, but is not limited thereto. As the adhesive, a water-based adhesive may be generally used, but a solventless photocurable adhesive may also be used depending on the type of the film to be attached.

The optical laminate may comprise a pressure-sensitive adhesive layer for adhesion with other members such as a liquid crystal panel or a cover glass. A pressure-sensitive adhesive for forming the pressure-sensitive adhesive layer is not particularly limited, and for example, it may be appropriately selected from those that an acrylic polymer, a silicone-based polymer, a polyester, a polyurethane, a polyamide, a polyether, or a polymer such as fluorine series or rubber series is used as a base polymer, and used. To the exposed surface of such a pressure-sensitive adhesive layer, a release film may be temporarily attached and covered for the purpose of the contamination prevention, etc., until it is provided to practical use.

Such a pressure-sensitive adhesive layer may be present on the bottom of the optical functional layer.

The present application also relates to a display device comprising the optical laminate. The type of the display device may vary without particular limitation, which may be, for example, a known LCD (liquid crystal display) or OLED (organic light emitting display), and the like, and in such a display device, the optical laminate may be applied by a conventional method.

In particular, the optical laminate can constitute a device requiring a so-called cover glass without applying the cover glass.

### Advantageous Effects

The present application can provide an optical laminate having excellent surface properties such as scratch resistance or hardness, which comprises, for example, a cover layer capable of replacing a so-called cover glass.

### Brief Description of Drawings

Figure 1 is a schematic diagram of a display device comprising an exemplary cover glass.
Figures 2 to 5 are diagrams showing structures of optical laminates comprising various cover layers.
Figures 6 to 8 are views showing evaluation results of polarizing plates of Examples.

### Mode for Invention

Hereinafter, the optical laminate will be described in more detail through Examples and the like according to the present application, but the scope of the present application is not limited to the following.

### 1. 500 g steel wool resistance evaluation

Steel wool resistance was evaluated using a steel wool of grade #0000 sold by Briwax of Europe as the steel wool. The steel wool was contacted with a cover layer under a load of 500 g using a measuring instrument (manufacturer: KIPAE ENT, trade name: KM-M4360), and the steel wool resistance was evaluated while moving it left and right. At this time, the contact area was set so that the width and length were approximately 2 cm and 2 cm or so, respectively (contact area: 2 cm²). The movement was performed at a speed of about 60times/min and the moving distance was approximately 10 cm. The steel wool test was performed until reflexes were observed by visual observation and indentations, scratches or ruptures, and the like were identified.

### 2. Pencil hardness evaluation

For measurement of pencil hardness, while the glass layer surface was drawn with a cylindrical pencil lead at a load of 500 g and an angle of 45 degrees using a pencil hardness measuring instrument (manufacturer: Chungbuk Tech, trade name: Pencil Hardness Tester), the hardness of the pencil lead was increased in steps until the occurrence of defects such as indentations, scratches or ruptures was confirmed. Here, the speed of the pencil lead was about 1 mm/sec, and the moving distance was about 10 mm. This test was performed at a temperature of about 25°C and 50% relative humidity.

### 4. Maximum holding curvature radius evaluation

The maximum holding curvature radius was evaluated for the cover layer by the Mandrel flexure evaluation method according to ASTM D522 standard.

### 5. Method of measuring nitrogen atom ratio

Such a ratio of nitrogen or phosphorus atoms in a glass layer can be measured by X-ray photoelectron spectroscopy (XPS). The method is based on a photoelectric effect and performs the analysis by measuring the kinetic energy of electrons emitted by the photoelectric effect due to the interaction of a surface with high energy light. The binding energy can be measured by emitting core electrons of an element of an analytical sample using X-rays as a light source, and measuring kinetic energy of the emitted electrons. The elements constituting the sample can be identified by analyzing the measured binding energy, and information on the chemical bonding state and the like can be obtained through chemical shift. In the present application, after a glass layer is formed on a silicon wafer to a thickness of about 0.5µm to 3µm or so, the ratio of nitrogen or phosphorus atoms can be measured in the manner described in each example or the like. In this case, the specific kind of the applied measuring equipment is not particularly limited as long as it is capable of the measurement of the photoelectron spectroscopy.

### 6. Measurement of thickness

After taking an SEM (scanning electron microscope) photograph about a cover layer, thicknesses of a base film, a hard coat layer, a glass layer, etc. contained in the cover layer were confirmed based on the photograph.

### 7. Water vapor transmission rate (WVTR) evaluation

The water vapor transmission rate was evaluated for a glass layer according to ASTM F1249 standard. It was evaluated after the glass layer was formed on a PET (poly(ethylene terephthalate)) film having a thickness of 50µm to a thickness of about 1 µm in the same manner as described in each of the following examples. Here, the applied PET film has a water vapor transmission rate of approximately 3.9 to 4.1g/m²/day when equally measured according to ASTM F1249 standard.

### 8. Heating test

Using an instrument equipped with a touch tip (K-9232, MIK21), the heating test on a cover layer was performed by heating the cover layer with the touch tip. At this time, it was performed by setting the pressure on heating as a level of about 250 gf and setting the once heating time as 0.5 seconds.

### 9. Writing test

The writing test on a cover layer was performed using an instrument equipped with a touch tip (K-9700, MIK21). The writing ranges were set such that the X-axis, Y-axis and Z-axis ranges were 700mm, 550mm and 100mm, respectively, and the pressure on writing was set as a level of about 250 gf.

### Example 1.

### Production of cover layer

2-(3,4-epoxycyclohexyl)ethyl trimethoxysilane and 3-glycidoxypropyl trimethoxysilane were condensed in a molar ratio of 1:1 in a known dehydration/condensation manner to prepare an oligomer (polyorganosiloxane), thereby forming a hard coat layer. The average unit of this oligomer is approximately (R¹SiO_{3/2})_{0.5}(R²SiO_{3/2}), wherein R¹ is a 2-(3,4-epoxycyclohexyl)ethyl group and R² is a 3-glycidoxypropyl group. The oligomer and a cationic photoinitiator (CPI-100P, San-Apro) were further mixed to prepare a composition for a hard coat layer. The cationic photoinitiator was applied at a ratio of approximately 5 to 6 parts by weight relative to 100 parts by weight of the oligomer. After coating the composition for the hard coat layer on one surface of a base film (ZRT, Zero Retardation TAC, FujiFilm) having a thickness of about 40µm or so as a base film, it was dried at a temperature of 80°C or so for about 2 minutes and then irradiated with ultraviolet rays at a light quantity of about 1,000 mJ/cm² using an ultraviolet irradiation instrument (Fusion, D bulb) and cured, thereby forming a hard coat layer having a thickness of about 30 µm o so. A hard coat layer having a thickness of about 30 µm or so was formed on the other side of the base film in the same manner (double-sided hard coat film having a structure of hard coat layer/base film/hard coat layer).

Subsequently, a glass layer was formed on any one hard coat layer of the double-sided hard coat film. TEOS (tetraethoxy silane), ethanol (EtOH), water (H₂O) and hydrochloric acid (HCl) were mixed in a weight ratio of 1:4:4:0.2 (TEOS: EtOH: H₂O: HCl) and stirred at room temperature (25°C) for 3 days or so to form a silica precursor composition. The silica precursor composition was applied on the hard coat layer by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a glass layer. The formed silica glass layer was washed with running water at 60°C or so for 2 minutes or so and dried in an oven at 80°C or so for 1 minute. The amount of nitrogen atoms in the produced glass layer was about 0.005 weight% or so, the water vapor transmission rate of the glass layer was in a level of approximately 3.9 to 4.0 g/m²/day, and the maximum holding curvature radius of the cover layer was about 2 pi or so.

### Manufacture of polarizing plate

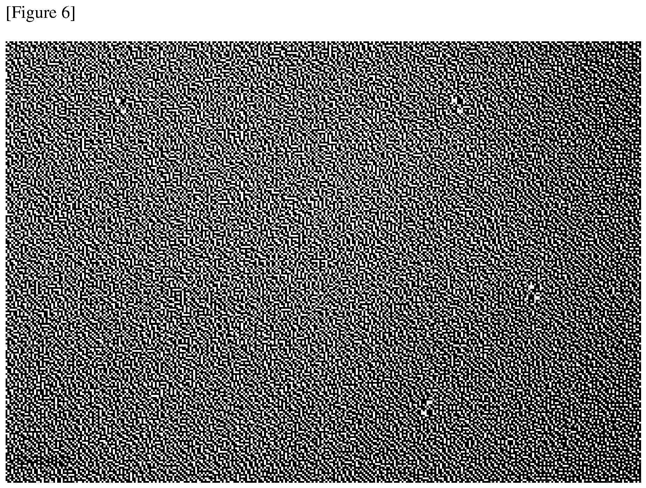

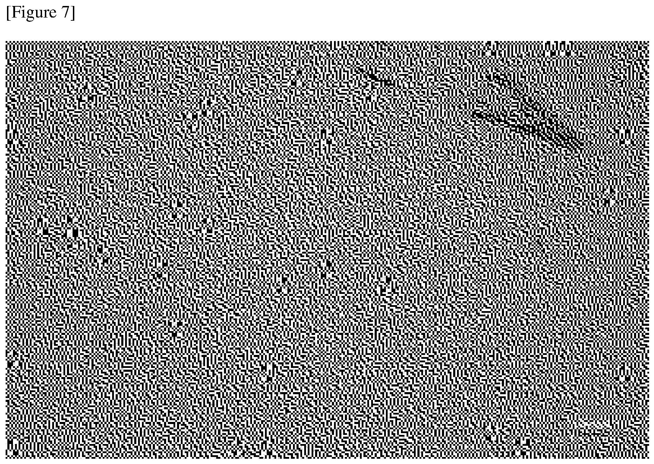

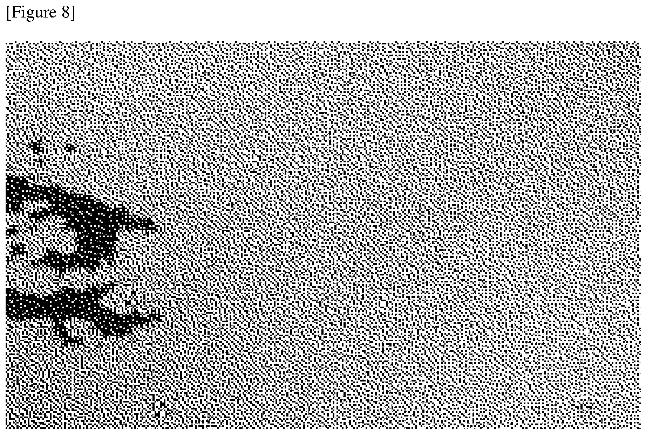

The hard coat layer without the formed glass layer in the above-produced cover layer (glass layer/hard coat layer/base film/hard coat layer) was attached to a polarizing plate structure comprising a polarizing layer with an adhesive to produce a polarizing plate. Here, a structure, in which a protective film (ZRT (Zero Retardation TAC) film, FujiFilm, thickness: about 40 µm) was attached to both sides of a known PVA (poly(vinyl alcohol)) film polarizing layer (thickness: about 12 µm), was used as the polarizing plate structure, and a known epoxy-based adhesive layer was used as the adhesive layer. Subsequently, a pressure-sensitive adhesive layer was formed on the bottom of the lower protective film in the structure of the obtained glass layer/hard coat layer/base film/hard coat layer/adhesive layer/protective film/polarizing layer/protective film to produce a polarizing plate. As a result of performing the heating test on the surface (cover layer surface) of the polarizing plate in the above-described manner, no damage was observed until the heating of 1,000,000 times, and the result was shown in Figure 6. Also, as a result of performing the writing test on the surface (cover layer surface) of the polarizing plate in the above-described manner, no damage was observed until the writing of 100,000 times, and the result was shown in Figure 7. Furthermore, as a result of performing the steel wool test on the surface (cover layer surface) of the polarizing plate, no damage was observed until 10,000 times, and the result was shown in Figure 8. In addition, the pencil hardness measured on the surface of the cover layer was in a level of approximately 9H. On the other hand, the maximum holding curvature radius of the polarizing plate was 8 pi on the inside (when the polarizing plate was concavely bent inward based on the cover layer) and 40 pi on the outside (when the polarizing plate was convexly bent outwards based on the cover layer).

### Example 2

A cover layer and a polarizing plate were produced in the same manner as in Example 1, except that the formation method of the glass layer was changed as follows. TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. The silica precursor composition was applied to the hard coat layer by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a glass layer. The formed glass layer was washed with running water at 60°C or so for 2 minutes or so and dried in an oven at 80°C or so for 1 minute. The amount of nitrogen atoms in the produced glass layer was 0.005 weight% or so, the water vapor transmission rate (WVTR) of the glass layer was 3.9 to 4.0 g/m²/day or so, and the maximum holding curvature radius of the cover layer was 2 pi or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 7,000 times. In addition, the pencil hardness measured on the surface of the cover layer was in a level of approximately 9H, the maximum holding radius of curvature was 8 pi on the inside and 40 pi or so on the outside.

### Example 3

A cover layer and a polarizing plate were produced in the same manner as in Example 1, except that the formation method of the glass layer was changed as follows. BTEST (bis(triethoxysilyl) ethane), ethanol (EtOH), water (H₂O) and hydrochloric acid (HCl) were mixed in a weight ratio of 1:6:6:0.01 (BTEST: EtOH: H₂O: HCl) and stirred at 65°C for 1 hour or so to form a silica precursor composition. The silica precursor composition was applied to the hard coat layer to a thickness of approximately 10 µm or so by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a glass layer. The formed glass layer was washed with running water at 60°C or so for 2 minutes or so and dried in an oven at 80°C or so for 1 minute. The ratio of nitrogen atoms in the produced glass layer was about 0.005 weight% or so, the water vapor transmission rate (WVTR) was 3.9 to 4.0 g/m²/day or so, and the maximum holding curvature radius of the cover layer was in a level of 2 pi. As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 8,000 times. In addition, the pencil hardness measured on the surface of the cover layer was in a level of approximately 8H, the maximum holding curvature radius was 8 pi on the inside and 40 pi or so on the outside.

### Example 4

A cover layer and a polarizing plate were produced in the same manner as in Example 1, except that the formation method of the glass layer was changed as follows. TEOS (tetraethoxy silane), ethanol (EtOH), water (H₂O) and hydrochloric acid (HCl) were mixed in a weight ratio of 1 :4:4:0.01 (TEOS: EtOH: H₂O: HCl) and stirred at 65°C for 1 hour or so to form a silica precursor composition. Approximately 4 parts by weight of a latent base generator (Formula F below, WPBG-018, WAKO) was mixed therewith relative to 100 parts by weight of the solid content of the silica precursor composition.

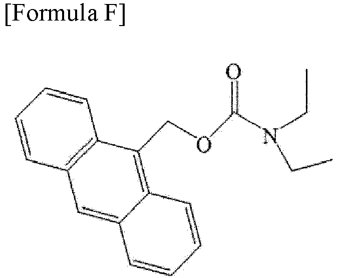

The silica precursor composition mixed with the latent base generator was applied on the hard coat layer by a bar coating method and dried at 80°C for 1 minute or so. After drying, the silica precursor composition was irradiated with ultraviolet rays at a light quantity of about 660mJ/cm² using an ultraviolet irradiation instrument (Fusion, D bulb) to form a glass layer. The amount of nitrogen atoms in the produced glass layer was 0.15 to 0.18 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 6,000 times. In addition, the pencil hardness measured on the surface of the cover layer was in a level of approximately 8H, the maximum holding curvature radius was 8 pi on the inside and 40 pi or so on the outside.

### Example 5

A cover layer and a polarizing plate were produced in the same manner as in Example 1, except that the formation method of the glass layer was changed as follows.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 4 parts by weight of a latent base generator (Formula F below, WPBG-018, WAKO) was mixed therewith relative to 100 parts by weight of the solid content of the silica precursor composition.

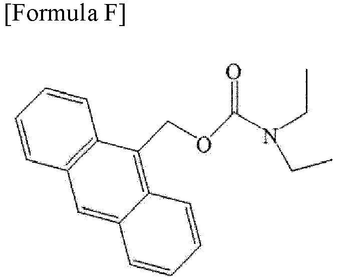

The silica precursor composition mixed with the latent base generator was applied on the hard coat layer by a bar coating method and dried at 80°C for 1 minute or so. After drying, the silica precursor composition was irradiated with ultraviolet rays at a light quantity of about 660mJ/cm² using an ultraviolet irradiation instrument (Fusion, D bulb) to form a glass layer. The amount of nitrogen atoms in the produced glass layer was 0.15 to 0.18 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 7,000 times. In addition, the pencil hardness measured on the surface of the cover layer was in a level of approximately 8H, the maximum holding curvature radius was 8 pi on the inside and 40 pi or so on the outside.

### Example 6

A cover layer and a polarizing plate were produced in the same manner as in Example 1, except that the formation method of the glass layer was changed as follows.

TEOS (tetraethoxy silane), ethanol (EtOH), water (H₂O) and hydrochloric acid (HCl) were mixed in a weight ratio of 1 :4:4:0.01 (TEOS: EtOH: H₂O: HCl) and stirred at 65°C for 1 hour or so to form a silica precursor composition. Approximately 2 parts by weight of a latent base generator (Formula G below, C11Z, Shikoku chemical) was mixed therewith relative to 100 parts by weight of the solid content of the silica precursor composition.

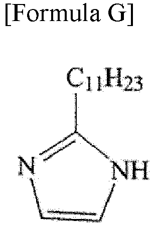

The silica precursor composition mixed with the latent base generator was applied on the hard coat layer by a bar coating method and dried at 80°C for 1 minute or so. After drying, the silica precursor composition was maintained at approximately 120°C for 10 minutes to form a glass layer. The amount of nitrogen atoms in the produced glass layer was 0.22 to 0.24 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 7,000 times. In addition, the pencil hardness measured on the surface of the cover layer was in a level of approximately 9H, the maximum holding curvature radius was 8 pi on the inside and 40 pi or so on the outside.

### Example 7

A cover layer and a polarizing plate were produced in the same manner as in Example 1, except that the formation method of the glass layer was changed as follows.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula G below, C11Z, Shikoku chemical) was mixed therewith relative to 100 parts by weight of the solid content of the silica precursor composition.

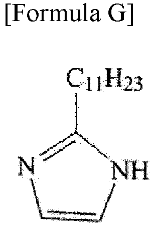

The silica precursor composition mixed with the latent base generator was applied on the hard coat layer by a bar coating method and dried at 80°C for 1 minute or so. After drying, the silica precursor composition was maintained at approximately 120°C for 10 minutes to form a glass layer. The amount of nitrogen atoms in the produced glass layer was 0.22 to 0.24 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 8,000 times. In addition, the pencil hardness measured on the surface of the cover layer was in a level of approximately 8H, the maximum holding curvature radius was 8 pi on the inside and 40 pi or so on the outside.

### Example 8

A cover layer and a polarizing plate were produced in the same manner as in Example 1, except that the formation method of the glass layer was changed as follows.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula H below, C17Z, Shikoku chemical) was mixed therewith relative to 100 parts by weight of the solid content of the silica precursor composition.

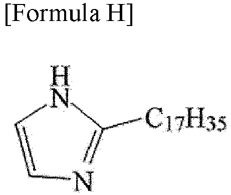

The silica precursor composition mixed with the latent base generator was applied on the hard coat layer by a bar coating method and dried at 80°C for 1 minute or so. After drying, the silica precursor composition was maintained at approximately 120°C for 10 minutes to form a glass layer. The amount of nitrogen atoms in the produced glass layer was 0.14 to 0.17 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 7,000 times. In addition, the pencil hardness measured on the surface of the cover layer was in a level of approximately 7H, the maximum holding curvature radius was 8 pi on the inside and 40 pi or so on the outside.

### Example 9

A cover layer and a polarizing plate were produced in the same manner as in Example 1, except that the formation method of the glass layer was changed as follows.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula I below, 2MZ-H, Shikoku chemical) was mixed therewith relative to 100 parts by weight of the solid content of the silica precursor composition.

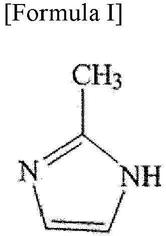

The silica precursor composition mixed with the latent base generator was applied on the hard coat layer by a bar coating method and dried at 80°C for 1 minute or so. After drying, the silica precursor composition was maintained at approximately 120°C for 10 minutes to form a glass layer. The amount of nitrogen atoms in the produced glass layer was 0.64 to 0.67 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 6,000 times. In addition, the pencil hardness measured on the surface of the cover layer was in a level of approximately 7H, the maximum holding curvature radius was 8 pi on the inside and 40 pi or so on the outside.

### Example 10

A cover layer and a polarizing plate were produced in the same manner as in Example 1, except that the formation method of the glass layer was changed as follows.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula J below, 1B2MZ, Shikoku chemical) was mixed therewith relative to 100 parts by weight of the solid content of the silica precursor composition.

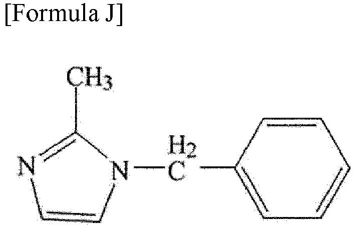

The silica precursor composition mixed with the latent base generator was applied on the hard coat layer by a bar coating method and dried at 80°C for 1 minute or so. After drying, the silica precursor composition was maintained at approximately 120°C for 10 minutes to form a glass layer. The nitrogen atom amount contained inside the produced glass layer was 0.29 to 0.32 weight% or so, the maximum holding curvature radius of the cover layer was 2 pi or so, and the water vapor transmission rate (WVTR) of the glass layer was 3.9 to 4.0 g/m²/day or so.

As a result of performing the heating test on the cover layer surface in the polarizing plate in the above-described manner, no damage was observed until the heating of 1,000,000 times, as a result of performing the writing test, no damage was observed until the writing of 100,000 times, and as a result of performing the steel wool test, no damage was observed until 6,000 times. In addition, the pencil hardness measured on the surface of the cover layer was in a level of approximately 6H, the maximum holding curvature radius was 8 pi on the inside and 40 pi or so on the outside.

## Claims

1. An optical laminate, comprising:
an optical functional layer; and
a cover layer formed on the top of the optical functional layer,
wherein the optical functional layer is a polarizing layer or a retardation layer,
wherein the cover layer comprises at least one hard coat layers and a glass layer,
wherein the hard coat layer comprises a polyorganosiloxane compound having an average unit of the following Formula F, and
wherein the glass layer comprises a silica network and a nitrogen atom, wherein the silica network is formed of one or more units selected from the group consisting of units of the following formulae A and B,
wherein the glass layer does not contain a linkage (Si-N) of the nitrogen and the silicon atom,
wherein a ratio of the silica network in the glass layer is 85 weight% or more and a ratio of the nitrogen atom in the glass layer is from 0.0001 to 6 weight% as measured by X-ray photoelectron spectroscopy (XPS):
[Formula A] RₙSiO_{(4-n)/2}
[Formula B] SiO_{3/2}L_{1/2}
wherein, R is hydrogen, an alkyl group, an alkenyl group, an aryl group, an arylalkyl group, an epoxy group or a (meth)acryloyloxyalkyl group, n is 0 or 1, and L is an alkylene group,
[Formula F] (R¹₃SiO_{1/2})ₐ(R²₂SiO_{2/2})_{b}(R³SiO_{3/2})_{c}(SiO_{4/2})_{d}(RO_{1/2})ₑ
wherein R¹ to R³ are each independently a hydrogen atom, an alkyl group, an alkenyl group, an aryl group or a cation curable functional group, at least one of R¹ to R³ is a cation curable functional group, R is a hydrogen atom or an alkyl group, and when the sum of a, b, c and d is converted into 1, c/(a + b + c + d) is a number of 0.7 or more, and e/(a + b + c + d) is a number in a range of 0 to 0.4.

2. The optical laminate according to claim 1, wherein the cover layer has 500 g steel wool resistance of at least 5,000 times, wherein the steel wool resistance is measured using a steel wool of grade #0000 and the steel wool is contacted with a cover layer under a load of 500 g using a measuring instrument, while moving it left and right, wherein the contact area is set so that the width and length are approximately 2 cm and 2 cm, respectively, the movement is performed at a speed of about 60 times/min, the moving distance is approximately 10 cm, and the steel wool test is performed until reflexes are observed by visual observation and indentations, scratches or ruptures are identified.

3. The optical laminate according to claim 1, wherein the cover layer has pencil hardness of 5H or more as measured by a method of drawing a pencil lead on a surface of the cover layer with a load of 500 g, a speed of 1 mm/sec, a moving distance of 10 mm and an angle of 45 degrees at a temperature of 25°C and 50% relative humidity.

4. The optical laminate according to claim 1, wherein the cover layer has maximum holding curvature radius in a range of 1 to 40 pi as measured by the Mandrel test in accordance with ASTM D522 standard.

5. The optical laminate according to claim 1, wherein the nitrogen atoms are contained in or derived from an amine compound having a pKa of 8 or less.

6. The optical laminate according to claim 1, wherein the nitrogen atoms are contained in or derived from an amine compound having a boiling point in a range of 80°C to 500°C.

7. The optical laminate according to claim 1, wherein the nitrogen atoms are contained in or derived from an amine compound having a room temperature vapor pressure of 10,000 Pa or less.

8. The optical laminate according to claim 1, wherein the nitrogen atoms are contained in or derived from a compound represented by the following formula 5; an ionic compound having a cationic compound represented by any one of the following formulae 7 to 9 or a compound of the following formula 12: 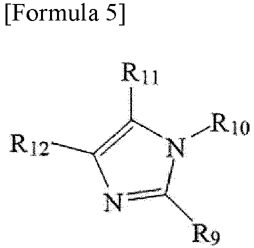 wherein, R₉ is hydrogen, an alkyl group having 1 to 20 carbon atoms or an aryl group having 6 to 12 carbon atoms, R₁₁ and R₁₂ are each independently hydrogen or an alkyl group having 1 to 4 carbon atoms, and R₁₀ is hydrogen, an alkyl group having 1 to 4 carbon atoms, an arylalkyl group having 7 to 16 carbon atoms or a substituent of the following formula 6: 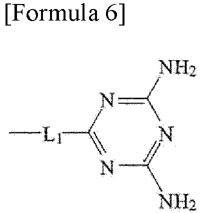 wherein, L₁ is an alkylene group having 1 to 4 carbon atoms: 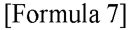 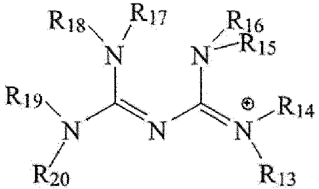 wherein, R₁₃ to R₂₀ are each independently hydrogen or an alkyl group having 1 to 20 carbon atoms: 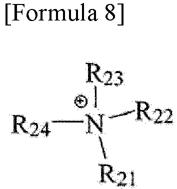 wherein, R₂₁ to R₂₄ are each independently hydrogen or an alkyl group having 1 to 20 carbon atoms: 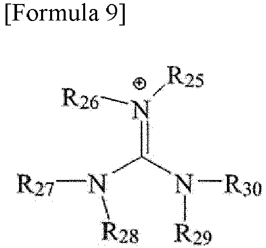 wherein, R₂₅ to R₃₀ are each independently hydrogen or an alkyl group having 1 to 20 carbon atoms: 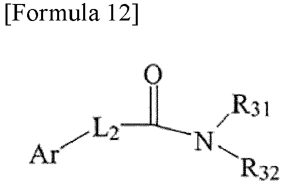 wherein R₃₁ and R₃₂ are each independently hydrogen, a linear or branched alkyl group having 1 to 4 carbon atoms or a cyclic alkyl group having 4 to 8 carbon atoms, or R₃₁ and R₃₂ are linked to each other to form a nitrogen-containing heterocyclic structure together with the nitrogen atom to which R₃₁ and R₃₂ are linked, Ar is an aryl group, and L₂ is -L₃-O- or an alkenyl group having 2 to 4 carbon atoms, where L₃ is an alkylene group having 1 to 4 carbon atoms or an alkylidene group having 1 to 4 carbon atoms.

9. The optical laminate according to claim 1, wherein the cover layer further comprises a base film, wherein the hard coat layer comprises an upper hard coat layer formed on the upper surface of the base film and a lower hard coat layer formed on the lower surface of the base film and wherein the glass layer is formed on the top of the upper hard coat layer.

10. The optical laminate according to claim 1, wherein the cover layer further comprises first and second base films and wherein the hard coat layer comprises first upper and first lower hard coat layers formed on both sides of the first base film, respectively, and second upper and second lower hard coat layers formed on both sides of the second base film, respectively.

11. The optical laminate according to claim 10, wherein the glass layer is formed on the top of the first or second upper hard coat layer.

12. A display device comprising the optical laminate of claim 1.

## Patentansprüche

1. Optisches Laminat, umfassend:
eine optische Funktionsschicht; und
eine Deckschicht, die auf der Oberseite der optischen Funktionsschicht gebildet ist,
wobei die optische Funktionsschicht eine Polarisationsschicht oder eine Verzögerungsschicht ist,
wobei die Deckschicht mindestens eine Hartbeschichtungsschicht und eine Glasschicht umfasst,
wobei die Hartbeschichtungsschicht eine Polyorganosiloxanverbindung mit einer durchschnittlichen Einheit der folgenden Formel F umfasst, und
wobei die Glasschicht ein Siliciumdioxidnetzwerk und ein Stickstoffatom umfasst, wobei das Siliciumdioxidnetzwerk aus einer oder mehreren Einheiten gebildet ist, die aus der Gruppe ausgewählt sind, die aus Einheiten der folgenden Formeln A und B besteht,
wobei die Glasschicht keine Bindung (Si-N) des Stickstoffs und des Siliciumatoms enthält,
wobei ein Anteil des Siliciumdioxidnetzwerks in der Glasschicht 85 Gew.-% oder mehr beträgt und ein Anteil des Stickstoffatoms in der Glasschicht 0,0001 bis 6 Gew.-% beträgt, gemessen mittels Röntgenphotoelektronenspektroskopie (XPS):
[Formel A] RₙSiO_{(4-n)/2}
[Formel B] SiO_{3/2}L_{1/2}
wobei R Wasserstoff, eine Alkylgruppe, eine Alkenylgruppe, eine Arylgruppe, eine Arylalkylgruppe, eine Epoxygruppe oder eine (Meth)acryloyloxyalkylgruppe ist, n 0 oder 1 ist und L eine Alkylengruppe ist,
[Formel F] (R¹₃SiO_{1/2})ₐ(R²₂SiO_{2/2})_{b}(R³SiO_{3/2})_{c}(SiO_{4/2})_{d}(RO_{1/2})ₑ
wobei R¹ bis R³ jeweils unabhängig voneinander ein Wasserstoffatom, eine Alkylgruppe, eine Alkenylgruppe, eine Arylgruppe oder eine kationenhärtbare Funktionsgruppe sind, mindestens eines von R¹ bis R³ eine kationenhärtbare Funktionsgruppe ist, R ein Wasserstoffatom oder eine Alkylgruppe ist, und wenn die Summe von a, b, c und d in 1 umgewandelt wird, c/(a + b + c + d) eine Zahl von 0,7 oder mehr ist, und e/(a + b + c + d) eine Zahl in einem Bereich von 0 bis 0,4 ist.

2. Optisches Laminat nach Anspruch 1, bei dem die Deckschicht eine Stahlwollbeständigkeit bei 500 g von mindestens dem 5.000-fachen aufweist, wobei die Stahlwollbeständigkeit unter Verwendung einer Stahlwolle der Güte #0000 gemessen wird und die Stahlwolle mit einer Deckschicht unter einer Last von 500 g unter Verwendung eines Messinstruments in Kontakt gebracht wird, während sie nach links und rechts bewegt wird, wobei die Kontaktfläche so eingestellt ist, dass die Breite und Länge ungefähr 2 cm bzw. 2 cm betragen, die Bewegung mit einer Geschwindigkeit von etwa dem 60-fachen/min durchgeführt wird, der Bewegungsabstand ungefähr 10 cm beträgt und der Stahlwolltest durchgeführt wird, bis Reflexe durch visuelle Beobachtung beobachtet werden und Vertiefungen, Kratzer oder Brüche identifiziert werden.

3. Optisches Laminat nach Anspruch 1, bei dem die Deckschicht eine Bleistifthärte von 5H oder mehr aufweist, gemessen durch ein Verfahren zum Ziehen einer Bleistiftmine auf eine Oberfläche der Deckschicht mit einer Last von 500 g, einer Geschwindigkeit von 1 mm/s, einem Bewegungsabstand von 10 mm und einem Winkel von 45 Grad bei einer Temperatur von 25 °C und 50% relativer Feuchtigkeit.

4. Optisches Laminat nach Anspruch 1, bei dem die Deckschicht einen maximalen Haltekrümmungsradius in einem Bereich von 1 bis 40 pi aufweist, gemessen durch den Dorntest gemäß der Norm ASTM D522.

5. Optisches Laminat nach Anspruch 1, bei dem die Stickstoffatome in einer Aminverbindung mit einem pKa von 8 oder weniger enthalten oder davon abgeleitet sind.

6. Optisches Laminat nach Anspruch 1, bei dem die Stickstoffatome in einer Aminverbindung mit einem Siedepunkt in einem Bereich von 80 °C bis 500 °C enthalten oder davon abgeleitet sind.

7. Optisches Laminat nach Anspruch 1, bei dem die Stickstoffatome in einer Aminverbindung mit einem Raumtemperaturdampfdruck von 10.000 Pa oder weniger enthalten oder davon abgeleitet sind.

8. Optisches Laminat nach Anspruch 1, bei dem die Stickstoffatome in einer Verbindung der folgenden Formel 5, einer ionischen Verbindung mit einer kationischen Verbindung der folgenden Formeln 7 bis 9 oder einer Verbindung der folgenden Formel 12 enthalten oder davon abgeleitet sind: 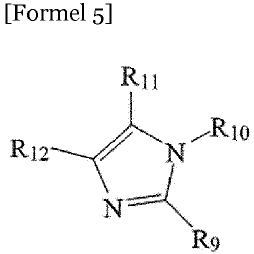 wobei R₉ Wasserstoff, eine Alkylgruppe mit 1 bis 20 Kohlenstoffatomen oder eine Arylgruppe mit 6 bis 12 Kohlenstoffatomen ist, Rₙ und R₁₂ jeweils unabhängig voneinander Wasserstoff oder eine Alkylgruppe mit 1 bis 4 Kohlenstoffatomen sind, und R₁₀ Wasserstoff, eine Alkylgruppe mit 1 bis 4 Kohlenstoffatomen, eine Arylalkylgruppe mit 7 bis 16 Kohlenstoffatomen oder ein Substituent der folgenden Formel 6 ist: 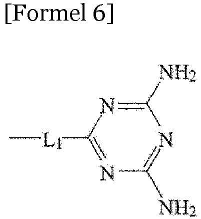 wobei L₁ eine Alkylengruppe mit 1 bis 4 Kohlenstoffatomen ist: 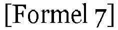 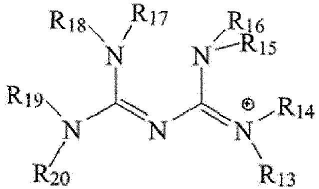 wobei R₁₃ bis R₂₀ jeweils unabhängig voneinander Wasserstoff oder eine Alkylgruppe mit 1 bis 20 Kohlenstoffatomen sind: 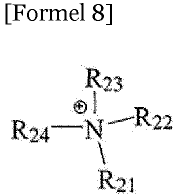 wobei R₂₁ bis R₂₄ jeweils unabhängig voneinander Wasserstoff oder eine Alkylgruppe mit 1 bis 20 Kohlenstoffatomen sind: 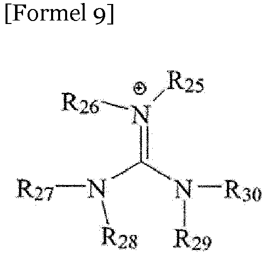 wobei R₂₅ bis R₃₀ jeweils unabhängig voneinander Wasserstoff oder eine Alkylgruppe mit 1 bis 20 Kohlenstoffatomen sind: 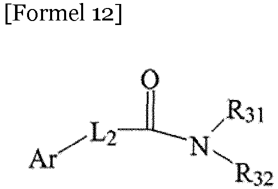 wobei R₃₁ und R₃₂ jeweils unabhängig voneinander Wasserstoff, eine lineare oder verzweigte Alkylgruppe mit 1 bis 4 Kohlenstoffatomen oder eine cyclische Alkylgruppe mit 4 bis 8 Kohlenstoffatomen sind, oder R₃₁ und R₃₂ miteinander verbunden sind, um zusammen mit dem Stickstoffatom, an das R₃₁ und R₃₂ gebunden sind, eine stickstoffhaltige heterocyclische Struktur zu bilden, Ar eine Arylgruppe ist, und L₂ -L₃-O- oder eine Alkenylgruppe mit 2 bis 4 Kohlenstoffatomen ist, wobei L₃ eine Alkylengruppe mit 1 bis 4 Kohlenstoffatomen oder eine Alkylidengruppe mit 1 bis 4 Kohlenstoffatomen ist.

9. Optisches Laminat nach Anspruch 1, bei dem die Deckschicht ferner einen Basisfilm umfasst, wobei die Hartbeschichtungsschicht eine obere Hartbeschichtungsschicht, die auf der oberen Oberfläche des Basisfilms gebildet ist, und eine untere Hartbeschichtungsschicht, die auf der unteren Oberfläche des Basisfilms gebildet ist, umfasst, und wobei die Glasschicht auf der Oberseite der oberen Hartbeschichtungsschicht gebildet ist.

10. Optisches Laminat nach Anspruch 1, bei dem die Deckschicht ferner erste und zweite Basisfilme umfasst, und wobei die Hartbeschichtungsschicht erste obere und erste untere Hartbeschichtungsschichten, die jeweils auf beiden Seiten des ersten Basisfilms gebildet sind, und zweite obere und zweite untere Hartbeschichtungsschichten, die jeweils auf beiden Seiten des zweiten Basisfilms gebildet sind, umfasst.

11. Optisches Laminat nach Anspruch 10, bei dem die Glasschicht auf der Oberseite der ersten oder zweiten oberen Hartbeschichtungsschicht gebildet ist.

12. Anzeigevorrichtung, umfassend das optische Laminat nach Anspruch 1.

## Revendications

1. Stratifié optique, comprenant :
une couche fonctionnelle optique ; et
une couche de recouvrement formée sur la partie supérieure de la couche fonctionnelle optique,
dans lequel la couche fonctionnelle optique est une couche de polarisation ou une couche de retard,
dans lequel la couche de recouvrement comprend une ou plusieurs couches de revêtement dur et une couche de verre,
dans lequel la couche de revêtement dur comprend un composé de polyorganosiloxane ayant une unité moyenne de la formule F ci-après, et
dans lequel la couche de verre comprend un réseau de silice et un atome d'azote, dans lequel le réseau de silice est formé d'une ou plusieurs unités sélectionnées dans le groupe constitué d'unités des formules A et B ci-après,
dans lequel la couche de verre ne contient pas une liaison (Si-N) de l'atome d'azote et de l'atome de silicium,
dans lequel un rapport du réseau de silice dans la couche de silice est égal ou supérieur à 85 % en poids et un rapport de l'atome d'azote dans la couche de verre est comprise entre 0,0001 et 6 % en poids, mesurée par spectroscopie de photoélectrons X (XPS) :
[Formule A] RₙSiO_{(4-n)/2}
[Formule B] SiO_{3/2}L_{1/2}
dans lequel, R est un hydrogène, un groupe alkyle, un groupe alkényle, un groupe aryle, un groupe arylalkyle, un groupe époxy ou un groupe (méth)acryloyloxyalkyle, n est 0 ou 1 et L est un groupe alkylène,
[Formule F] (R¹₃SiO_{1/2})ₐ(R²₂SiO_{2/2})_{b}(R³SiO_{3/2})_{c}(SiO_{4/2})_{d}(RO_{1/2})ₑ
dans lequel R¹ à R³ sont chacun indépendamment un atome d'hydrogène, un groupe alkyle, un groupe alkényle, un groupe aryle ou un groupe fonctionnel durcissable cationique, au moins un de R¹ à R³ est un groupe fonctionnel durcissable cationique, R est un atome d'hydrogène ou un groupe alkyle et, lorsque la somme de a, b, c et d est convertie en 1, c/(a + b + c + d) est un nombre de 0,7 ou plus et e/(a + b + c + d) est un nombre dans une plage de 0 à 0,4.

2. Stratifié optique selon la revendication 1, dans lequel la couche de recouvrement a une résistance à la laine d'acier de 500 g d'au moins 5000 fois, dans lequel la résistance à la laine d'acier est mesurée en utilisant une laine d'acier de grade #0000 et la laine d'acier est mise en contact avec une couche de recouvrement sous une charge de 500 g en utilisant un instrument de mesure, tout en la déplaçant à gauche et à droite, dans lequel la zone de contact est telle que la largeur et la longueur font approximativement 2 cm et 2 cm, respectivement, le déplacement est effectué à une vitesse d'environ 60 fois/min, la distance de déplacement est approximativement de 10 cm et l'essai à la laine d'acier est effectué jusqu' à ce que des réflexes soient observés par observation visuelle et que des entailles, des rayures ou des ruptures soient identifiées.

3. Stratifié optique selon la revendication 1, dans lequel la couche de recouvrement a une dureté au crayon égale ou supérieure à 5H, mesurée par un procédé d'essai de dureté au crayon sur une surface de la couche de recouvrement à une charge de 500 g, une vitesse de 1 mm/sec, une distance de déplacement de 10 mm et un angle de 45 degrés à une température de 25 °C et une humidité relative de 50 %.

4. Stratifié optique selon la revendication 1, dans lequel la couche de recouvrement a un rayon de courbure de maintien maximum dans une plage de 1 à 40 pi, mesuré par l'essai du mandrin selon la norme ASTM D522.

5. Stratifié optique selon la revendication 1, dans lequel les atomes d'azote sont contenus dans ou dérivés d'un composé d'amine ayant un pKa égal ou inférieur à 8.

6. Stratifié optique selon la revendication 1, dans lequel les atomes d'azote sont contenus dans ou dérivés d'un composé d'amine ayant un point d'ébullition dans une plage de 80 °C à 500 °C.

7. Stratifié optique selon la revendication 1, dans lequel les atomes d'azote sont contenus dans ou dérivés d'un composé d'amine ayant une pression de vapeur à température ambiante égale ou inférieure à 10 000 Pa.

8. Stratifié optique selon la revendication 1, dans lequel les atomes d'azote sont contenus dans ou dérivés d'un composé représenté par la formule 5 ci-après ; un composé ionique ayant un composé cationique représenté par l'un des formules 7 à 9 ci-après ou un composé de la formule 12 ci-après : 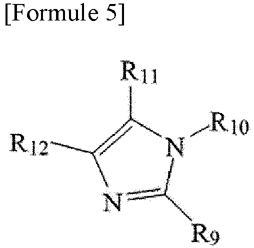 dans lequel, R₉ est un hydrogène, un groupe alkyle ayant 1 à 20 atomes de carbone ou un groupe aryle ayant 6 à 12 atomes de carbone, R₁₁ et R₁₂ sont chacun indépendamment un hydrogène ou un groupe alkyle ayant 1 à 4 atomes de carbone et R₁₀ est un hydrogène, un groupe alkyle ayant 1 à 4 atomes de carbone, un groupe arylalkyle ayant 7 à 16 atomes de carbone ou un substituant de la formule 6 ci-après : 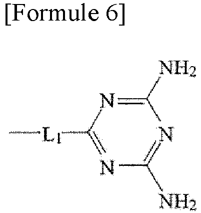 dans lequel, L₁ est un groupe alkylène ayant 1 à 4 atomes de carbone : 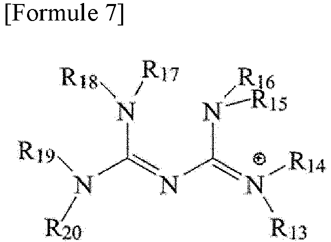 dans lequel, R₁₃ à R₂₀ sont chacun indépendamment un hydrogène ou un groupe alkyle ayant 1 à 20 atomes de carbone : 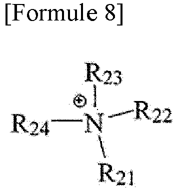 dans lequel, R₂₁ à R₂₄ sont chacun indépendamment un hydrogène ou un groupe alkyle ayant 1 à 20 atomes de carbone : 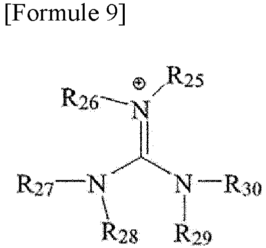 dans lequel, R₂₅ à R₃₀ sont chacun indépendamment un hydrogène ou un groupe alkyle ayant 1 à 20 atomes de carbone : 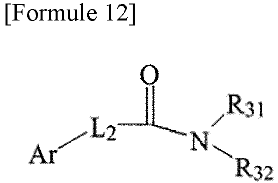 dans lequel R₃₁ et R₃₂ sont chacun indépendamment un hydrogène, un groupe alkyle linéaire ou ramifié ayant 1 à 4 atomes de carbone ou un groupe alkyle cyclique ayant 4 à 8 atomes de carbone, ou R₃₁ et R₃₂ sont liés l'un à l'autre pour former une structure hétérocyclique contenant de l'azote avec l'atome d'azote auquel R₃₁ et R₃₂ sont liés, Ar est un groupe aryle et L₂ est -L₃-O- ou un groupe alkényle ayant 2 à 4 atomes de carbone où L₃ est un groupe alkylène ayant 1 à 4 atomes de carbone ou un groupe alkylidène ayant 1 à 4 atomes de carbone.

9. Stratifié optique selon la revendication 1, dans lequel la couche de recouvrement comprend en outre un film de base, dans lequel la couche de revêtement dur comprend une couche supérieure de revêtement dur formée sur la surface supérieure du film de base et une couche inférieure de revêtement dur formée sur la surface inférieure du film de base et dans lequel la couche de verre est formée sur la partie supérieure de la couche supérieure de revêtement dur.

10. Stratifié optique selon la revendication 1, dans lequel la couche de recouvrement comprend en outre des premier et deuxième films de base et dans lequel la couche de revêtement dur comprend une première couche de revêtement dur supérieure et une première couche de revêtement dur inférieure formées des deux côtés du premier film de base, respectivement, et une deuxième couche de revêtement dur supérieure et une deuxième couche de revêtement dur inférieure formées des deux côtés du deuxième film de base, respectivement.

11. Stratifié optique selon la revendication 10, dans lequel la couche de verre est formée sur la partie supérieure de la première ou de la deuxième couche de revêtement dur supérieure.

12. Dispositif d'affichage comprenant le stratifié optique selon la revendication 1.
